# EUROPEAN PATENT APPLICATION

(11) **EP 1 530 115 A2**
(43) Date of publication of application: **11.05.2005**
(21) Application number: 04105547.6
(22) Date of filing: 05.11.2004
(51) Int. Cl.: G06F 1/00, H04L 29/06

(54) **Method and system for controlling access to content**

(30) Priority: 05.11.2003 US 701066
(71) Applicant: Nokia Corporation, 02150 Espoo (FI)
(72) Inventor: Lipsanen, Matti, 20100, Turku (FI); Vermola, Larri, 20500, Turku (FI); Saarikivi, Tuomo, 00200, Helsinki (FI)
(74) Representative: Read, Matthew Charles

(57) **Abstract**

A system, method and computer program is provided to control user access, by one or more users each having associated therewith a wireless communications device, to content transmitted or receivable across a communications medium. The system, method and computer program perform a detection of a presence of one or more users in at least one region in which the receivable content may be consumed via the one or more users' wireless communications devices by wireless communications, and a determination of access rights to content based on the detected one or more users, the access rights defining a suitability or unsuitability of one or more users to consume content. Access or consumption of receivable content by the one or more detected users may be selectively controlled according to at least one of the determined access rights and access rating of receivable content.

## Description

### BACKGROUND

### 1. Technical Field

The present invention relates to controlling access or consumption of content.

### 2. Art Background

In developing telecommunications networks, the amount of offered content can be substantial. In that context, minors can easily become subjected to inappropriate or unsuitable content. Further, mobile terminals are typically personal and individual devices. An approach is needed to control content consumption in both of the situations described above.

Furthermore, as more content becomes available, issues of Digital Rights Management (DRM) and parental control have become increasingly important. DRM may be used to protect content from unauthorized copying, and may include a mechanism referred to as watermarking that identifies the owner of the content. With electronic content, digital watermarking may be performed by inserting a pattern of bits into a digital image, audio or video file that identifies the file's copyright information (author, rights, etc.). One purpose of digital watermarks is to provide copyright protection for intellectual property in digital format. Digital watermarks may be designed to be completely invisible, or in the case of audio clips, inaudible. Moreover, the actual bits representing the watermark may be scattered throughout a file in such a way to prevent unwanted identification and manipulation thereof. An approach is also needed to facilitate control over access and consumption of content while protecting the rights of the content owners.

### SUMMARY

A system, method and computer program is provided to control user access, by one or more users each having associated therewith a wireless communications device, to content receivable or received across a communications medium. The system, method and computer program perform a detection of a presence of one or more users in at least one region in which the receivable content may be consumed via the one or more users' wireless communications devices by wireless communications, and a determination of access rights to content based on the detected one or more users, the access rights defining a suitability or unsuitability of one or more users to consume content. Access or consumption of receivable content by the one or more detected users may be selectively controlled according to at least one of the determined access rights and access rating of receivable content. The region may be defined by a communications range of the receiver terminal or a range of vicinity of outputted content.

The wireless communications may include Bluetooth, RFID or involve communications via WLAN and WPAN.

The receivable content may be broadcasted or multicasted by one or more content providers or managers for receipt by the receiver terminal, such as a set top box or a wireless user terminal. For example, the receivable content may be provided across the communications medium by digital video broadcasting to the receiver terminal or time-slicing communications protocols.

A presence of one or more users may be detected through detection of a location of a user's communications device and determining whether the user's communications device is within the region.

The determined access rights may be determined according to at least an access rights level of at least one detected user. The access rights level enables determination of a suitability or unsuitability of particular content or content-types for consumption by the user. The access rights level may indicate one of a maturity of a user, suitable content type, and unsuitable content-type; may be a highest or lowest access rights level of the detected users; or may be based on a combination of access rights levels of the detected users. The access rights level of a user may be received from the user's communications device, or retrieved from a local or remote storage facility.

Access or consumption of receivable content by one or more detected users may be selectively controlled according to at least one of the determined access rights and access rating of receivable content. This may involve filtering received content for output by the receiver terminal to restrict or allow access or consumption of received content according to the determined access rights or filtering a content guide (such as a broadcast program guide) indicating content or content-types receivable by the receiver terminal. The content guide may be received from a remote location.

The content guide may include one or more items indicating receivable content or content-type, the items being configured in a hierarchical parent-child structure in which an access rating of a child item can not exceed an access rating of an associated parent item. In this example, the filtering of the content guide may involve preventing or abstaining from processing of an unsuitable item and any associated child items of the content guide based on the determined access rights.

Access control may further include controlling searching or selection of content or content-type by a user based on the determined access rights, or controlling receipt of content from the receivable content by the receiver terminal based on the determined access rights. Receipt control may involve abstaining from receiving data burst of content determined unsuitable for access or consumption based on the determined access rights, e.g., powering down at least content receiving components of the receiver terminal during data bursts (or time-slice transmission) of content determined unsuitable.

Receivable content may include an electronic watermark indicating an access rating for the content.

The determined access rights may further be determined for a period of time or dynamically updated. This dynamic implementation may involve determining a new access rights upon a triggering event comprising one of detection of a new user, detection of a user leaving the region, detection of a powering down of the wireless communications device of a detected user, and detection of a change in an access rights profile set on the wireless communications device of a detected user. Access or consumption control for receivable content may then be dynamically updated according to the updated or newly determined access rights.

In another aspect, a system, method and computer program is provided to control user access to content receivable by a terminal across a communications medium. This implementation may involve maintaining a content guide including at least items identifying or classifying content or content-types receivable by (or available to or offered to) a terminal for consumption and access rating for receivable (or available or offered) content, the items of the content guide being arranged in a parent-child hierarchical structure having a hierarchy rule in which an access rating of a child item does not exceed an access rating of a corresponding parent item; and providing the content guide to the terminal. The content guide may be provided via broadcasting the content guide from a content provider. The content guide may include information concerning available programs and transmission times of the programs, and may be an Electronic Program Guide (EPG) or an Electronic Service Guide (ESG). This implementation may further involve receiving information for updating a content guide; determining whether the update complies with the hierarchy rule; and allowing or restricting the update based on the determination. The term "receivable" may also mean herein "available" or "offered" when discussing content.

In a further aspect, a system, method and computer program is provided to implement access of content receivable by a terminal across a communication medium. This implementation may involve receiving from a remote location a content guide including at least items identifying content or content-types receivable by a terminal for consumption and access rating for receivable content, the items of the content guide being arranged in a parent-child hierarchical structure having a hierarchy rule in which an access rating of a child item does not exceed an access rating of a corresponding parent item in the content guide; and controlling access or consumption of receivable content according to an access rights level of a user associated with the terminal and the access rating of content from the content guide. Access control may involve filtering the items of the content guide based on the access rights level of for the user, such as processing items of the content guide based on the access rights level for the user. The processing of items may involve abstaining from processing a parent item and any associated child items when an access rating of the parent item exceeds the access rights level of the user.

In yet a further aspect, a system, method and computer program are provided to control access to content. This implementation may involve providing content; and encoding the content with an electronic watermark indicating an access rating associated with the content. The access rating may define a suitability of unsuitability for consumption by a user. Content having an electronic watermark indicating an access rating associated with the content may be received; and access to content by at least one user of the terminal may be controlled according to the access rating. The access to content may be controlled according to the access rating and an access rights level of the user. The content having "watermark" may be implemented in three UDP-streams: Audio, Video and Data which all are synchronized together. At least one of the streams may contain various meta information about the content (e.g., one example of which may be the age-limit).

In various implementation herein, a computer-readable medium may be encoded with processing instructions for implementing the various method and functions herein to control access to content, to be performed by a computerized system. In various aspects, the computerized system may take the form of a communications device or system. The various implementations herein may also be performed by hardware, software, firmware or a combination thereof.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The present invention will be described with reference to the accompanying drawings, wherein:

FIG. 1 is a diagram of an exemplary operational environment in accordance with one embodiment of the present invention;

FIG. 2 is a diagram of an exemplary operational environment in accordance with another embodiment of the present invention;

FIG. 3 is a block diagram of an exemplary communications device implementation;

FIG. 4 is a block diagram of an exemplary content receiving device implementation;

FIG. 5 is a block diagram of an exemplary content provider or manager implementation;

FIGS. 6-9 are screenshots of an exemplary content guide;

FIG. 10 is an exemplary framework of a content guide having a hierarchical structure based on access ratings of guide item classifying content and/or content-types;

FIGS. 11-18 are flowcharts of exemplary processes by which access or consumption of content is controlled;

FIG. 19 is a flowchart of an exemplary process by which a content guide is updated or modified;

FIG. 20 is a flowchart of an exemplary process by which a user access rights level is set;

FIGS. 21-22 are flowcharts of exemplary processes by which content is encoded with access rating and access to such content is controlled;

FIG. 23 is a flowchart of an exemplary short-range encounter between two devices, such as a content receiver and a user's device, employing Bluetooth communications; and

FIG. 24 is a flowchart of an exemplary short-range encounter between two devices, such as a content receiver and a user's device, employing at least RFID technology.

### DETAILED DESCRIPTION OF THE PREFERRED EMBODIMENTS

### I. OPERATIONAL ENVIRONMENTS

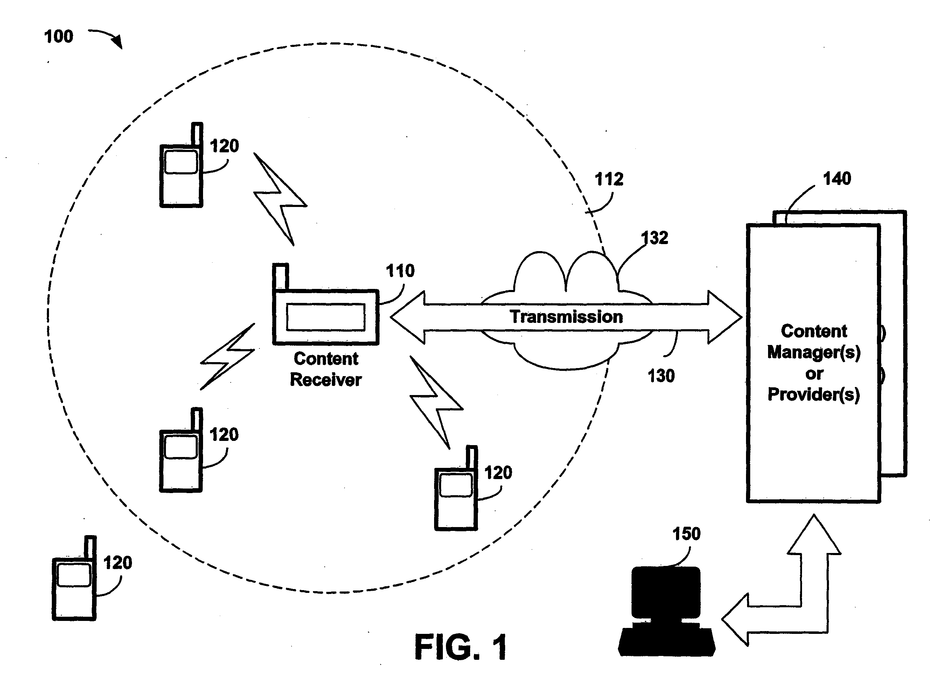

Before describing the invention in detail, it is helpful to describe various environments in which the invention may be used. Accordingly, FIG. 1 is a diagram of an operational environment in which content receiver 110 and content manager or provider (hereinafter "content provider") 140 communicate by way of communications transmissions 132 across a network environment 132 in accordance with one embodiment of the present invention. Communications transmission 132 may be unilateral, bilateral or multilateral.

Communications may involve the transmission of content related information including content, content guide or the like identifying receivable content, or other data to facilitate delivery and consumption of content at the content receiver side. Examples of such content may include multimedia broadcasts or multicasts, audio broadcasts or multicasts, images, video, music, games, data files, electronic documents, database entries and so forth.

Network environment 132 may be any suitable network that enables the transfer of information between content provider 140 and receiver 110. For instance, communications network 132 may be a broadcast or multicast network. Examples of broadcast networks include terrestrial and satellite wireless television distribution systems, and broadcast cable networks, such as a Data Over Cable Service Interface Specification (DOCSIS) network. The broadcast network may be a digital broadcasting network which supports the Digital Video Broadcast (DVB) standard, such as Terrestrial Digital Video Broadcasting (DVB-T) or may employ other DVB-based standards, such as DVB-MHP (Multimedia Home Platform), DVB-H (handheld), DVB-IP and so forth.

In this regard, DVB-T, which is related to DVB-C (cable) and DVB-S (satellite), is the terrestrial variant of the DVB standard. As is well known, DVB-T is a wireless point-to-multipoint data delivery mechanism developed for digital TV broadcasting, and is based on the MPEG-2 transport stream for the transmission of video and synchronized audio. DVB-T has the capability of efficiently transmitting large amounts of data over a broadcast channel to a high number of users at a lower cost, when compared to data transmission through mobile telecommunication networks using, e.g., 3G systems. Advantageously, DVB-T has also proven to be exceptionally robust in that it provides increased performance in geographic conditions that would normally affect other types of transmissions, such as the rapid changes of reception conditions, and hilly and mountainous terrain. On the other hand, other variations of this DVB-T are coming in markets to and take into account handheld devices capabilities, like power consumptions.

Digital broadband data broadcast networks are for in addition to the delivery of television content capable of delivering data, such as Internet Protocol (IP) data. Other examples of broadband data broadcast networks include Japanese Terrestrial Integrated Service Digital Broadcasting (ISDB-T), Digital Audio Broadcasting (DAB), and MBMS, and those networks provided by the Advanced Television Systems Committee (ATSC). In many such systems, a containerization technique is utilized in which content for transmission is placed into MPEG-2 packets which act as data containers. Thus, the containers can be utilized to transport any suitably digitized data including, but not limited to High Definition TV, multiple channel Standard definition TV (PAUNTSC or SECAM) and, of course, broadband multimedia data and interactive services.

Network environment 132 may also be a packet-based network, such as the Internet or a wireless cellular network that, in addition to voice telephony, allows the transfer of content and data and other services. For example, network environment 132 may be capable of operating in accordance with 2G wireless communication protocols IS-136 (TDMA), GSM, and IS-95 (CDMA). Some narrow-band AMPS (NAMPS), as well as TACS, network environments may also benefit from the teaching of this invention, as should dual or higher mode networks (e.g., digital/analog or TDMA/CDMA/analog networks).

As a further example, network environment 132 may be a third generation (3G) mobile network such as the Universal Mobile Telephone System (UMTS) network employing Wideband Code Division Multiple Access (WCDMA) radio access technology.

Content provider 140 may be any device or system suitable for generating, modifying, managing and/or delivering content and other related information to facilitate delivery and consumption of content in accordance with the access control implementations herein. The other related information may include content guide, access ratings of content, access information to obtain particular content, and so forth. Content provider 140 may also encode (or embed) content with an access rating, such as through the use of electronic watermarking technologies employed in setting copyright watermarks.

Administrative terminal 150 may be any device or system suitable for enabling an administrator to perform general administrative duties over content provider 140 and to manage content maintained and delivered by the provider. For example, terminal 150 may be a computer connected to content provider 140 via a network.

Content receiver 110 may be any device or system suitable for receiving content related information, such as content and content guide, and outputting content guide for selection by one or more users (e.g., an audience) and outputting content for consumption by one or more users. The output of content may involve the use of a media player or the like. In various embodiments, content receiver 110 may be a set top box (STB) connected to or integrated with an output device(s) such as a display, a speaker, a television set, a home entertainment system, kiosk, and so forth.

As shown in FIG. 1, content receiver 110 may further perform communications with one or more wireless communications devices (WCDs) 120 across a wireless medium. Communications between receiver 110 and a WCD 120 may be conducted via a short-range wireless network, such as personal area networks (PANs) and/or wireless local area networks (WLANs). An exemplary PAN is Bluetooth. Examples of WLAN standards include the IEEE 802.11 standard and the HIPERLAN standard. When employing Bluetooth communications, receiver 110 may be the master device with WCDs 120 being slave devices.

Other shorter range or longer range wireless communications technologies may also be employed in to facilitate communications between WCD 120 and receiver 110. These may include for example Infra-Red technologies, Radio Frequency Identification (RFID) technologies, cellular and so forth. When employing RFID, receiver 110 may include an RFID reader and WCD 120 may include RFID transponder or tag.

WCD 120 may be a cellular phone, pager, personal digital assistant (PDA), or other wireless-enabled device or terminal which may be carried on a person. When a transponder, such as a RFID transponder is employed, WCD 120 may also take any shape or form such as a card, personal accessory (e.g., watch, jewelry, etc.), badge and so forth.

In general, a content receiver may be configured to control any level of media consumption by one or more users (or consumers), such as from receipt of content, user search or selection of content, and output of content.

In one aspect of the access control implementations herein, a content receiver controls user access, by one or more users each having associated therewith a wireless communications device, to content receivable across a communications medium. The content receiver detects a presence of one or more users in at least one region in which the receivable content may be consumed via the one or more users' wireless communications devices by wireless communications, and determines access rights to receivable content based on the detected one or more users. The access rights may define a suitability of unsuitability of one or more users to consume content. Access or consumption of receivable content by the one or more detected users may be selectively controlled according to at least one of the determined access rights and access rating of receivable content.

In the example shown in FIG. 1, a reference numeral 112 designates a region in which content from the content receiver may be consumed by one or more users. As shown, in region 112, three users may be watching content, such as television programs, received and outputted from receiver 110 on a television set in a recreation room of a house. Each user has associated therewith a WCD 120. Receiver 110 detects a presence of the users in the region via their WCDs 120 and controls access or consumption of content based on detected users.

Access control may involve, for example, obtaining an access rights level of at least one of the detected users, and selectively restricting or allowing consumption of content according to at least an access rights level of at least one of the detected users or a nature of the content. For example, in FIG. 1, the lowest or highest access rights level of the three users may be employed in the operation of controlling access or consumption of content. In a parental control context, access rights level may define a level of content suitable or not suitable for consumption by a user according to a maturity level or age of the user or the nature of the content or other suitable rating system.

Access rights level for an audience of one detected user or a group of detected users may be dynamically updated and accessibility or restriction to content may be dynamically changed accordingly. Access rights level for a user or a group of users may also be determined for a time period, such as until one or more user's device are turned off or powered down.

In another aspect, receiver 110 may be provided with a content guide which may identify various content receivable for access and/or consumption and include information on how to obtain the various content and access ratings for one or more content. The content guide may be an Electronic Program Guide (EPG), Electronic Service Guide (ESG), Mobile Media Guide (MMG), Digital Television Guide or other user guide or menu which may be outputted to a user such as for search and selection of content. For example, the Electronic Service Guide metadata (ESG metadata) contains information about the services available. Through that information, using ESG application, a user can select the services and items he/she is interested in and find stored items on the terminal. The information in the content guide may be filtered to restrict or allow access and consumption of content in a selective manner in accordance with at least an access right level of one or more users.

In a further aspect, power consumption of receiver 110 may be reduced or minimized when content may be delivered through time-slicing (or data bursts) communications protocol. This is particularly useful when a portable receiver is employed. One method to reduce power consumption would be to use Time Division Multiplex (TDM) where a receiver is ON only when receiving data (or service) bursts. In accordance with an access control implementation herein, the receiver may be configured to turn OFF or power down when receiving data bursts for restricted content, e.g., content deemed unsuitable for access and consumption by one or more users, or to turn ON or power up when receiving data bursts for non-restricted or suitable content.

Although the above example discusses access control in the context of a set top box receiver arrangement, the access control implementation may be employed in conjunction with any receiver device or terminal arrangement where one or more users may be able to consume (e.g., view, hear, etc.) content outputted from the device. For example, receiver 110 may take the form of a cellular phone, personal digital assistant (PDA) or the like, computer or portable computer, other portable communications terminal and so forth.

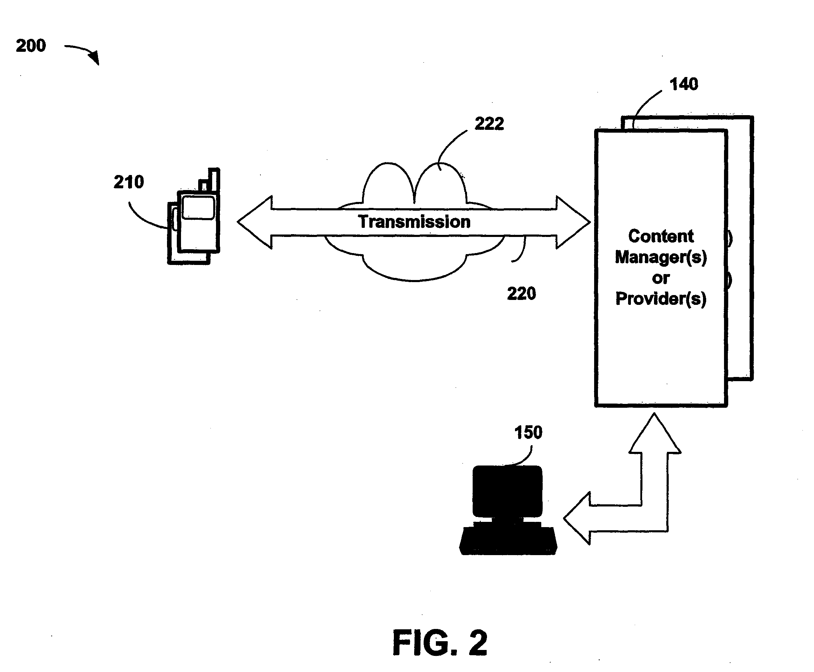

FIG. 2 is a diagram of an operational environment similar to that shown and described above for FIG. 1. As shown, a communications device 210 and content provider 140 communicate by way of communications transmissions 220 across a network environment 222. This environment is simply provided to show that the various access control implementations described herein may also be employed with a portable device, such as a cellular phone, PDA or the like, computer or portable computer, other portable communications terminal and so forth.

The above description of the operational environments of FIGS. 1 and 2 provide a few exemplary operational environments for performing access control over content. These and other examples are discussed in further detail below. The access control implementations herein make it possible to preserve desired level of intimacy on any level of media consumption starting from searching for the content, selecting desired content or outputting certain content.

### II. BLUETOOTH TECHNOLOGY

As discussed above, receiver 110, WCD 120 and device 210 may employ Bluetooth technologies to perform communications. An exemplary architecture of a Bluetooth-enabled device may include a host, which is coupled to a Bluetooth segment. The host is responsible for functions involving user applications and higher protocol layers, while the Bluetooth segment is responsible for lower layer protocols. More particularly, the Bluetooth segment is responsible for Bluetooth specific communications with other devices.

The Bluetooth segment includes a host controller interface (HCI), a link manager, a link controller, a Bluetooth transceiver, and an antenna.

The link manager performs functions related to Bluetooth link set-up, security and control. These functions involve discovering corresponding link managers at remote devices and communicating with them according to a link manager protocol (LMP). To perform these functions, LMP defines a set of messages, which are also referred to as protocol data units (PDUs). The link manager exchanges these PDUs with link managers at remote devices.

The link manager exchanges information with the host across the HCI. This information may include commands received from the host, and information transmitted to the host. The HCI defines a set of messages, which provide for this exchange of information.

The link controller operates as an intermediary between the link manager and the Bluetooth transceiver. The link controller also performs baseband processing for Bluetooth transmission, such as error correction encoding and decoding. In addition, the link controller exchanges data between corresponding link controllers at remote devices according to physical layer protocols. Examples of such physical layer protocols include retransmission protocols such as the ARQ protocol.

The Bluetooth transceiver is coupled to an antenna. The transceiver includes electronics that allow the device (in conjunction with the antenna) to exchange wireless Bluetooth signals with devices. Such electronics include modulators and demodulators, amplifiers, and filters. In a master-slave implementation, the range of a master device may be configured to cover an area or region, such as shown by reference numeral 112 of FIG.1, in which content may be consumed.

This architecture may be implemented in hardware, software, firmware, or any combination thereof and may be employed to implement other types of wireless communications technologies.

### III. RFID TECHNOLOGY

RFID technology utilizes electromagnetic or electrostatic coupling in the radio frequency (RF) portion of the electromagnetic spectrum. An RFID reader includes at least an antenna and transceiver. An RF signal is transmitted from the RFID reader that activates the an RFID transponder or tag when touched to, or within a predetermined range of, the tag. When a tag has been activated, it transmits information back to the RFID reader. More particularly, in the case of a passive tag (described below), the tag may be energized by a time-varying electromagnetic RF wave generated by the RFID reader. When the RF field passes through the antenna coil associated with the tag, a voltage is generated across the coil. This voltage is ultimately used to power the tag, and make possible the tag's return transmission of information to the reader, sometimes referred to as backscattering.

RFID does not require direct contact, although direct contact with an RFID tag can occur, and in some instances may be required. The frequency employed will at least partially dictate the transmission range of the reader/tag link. The required proximity of the RFID reader to a tag can range from a very short range (touching or near touching) to many meters, depending on the frequency employed and the power output. For example, when a WCD with RFID tag comes within a range of a device with an RFID reader, the tag can receive a signal from the RFID reader and respond with the desired information. In one aspect, the range of the reader may be configured to cover an area or region, such as shown by reference numeral 112 of FIG.1, in which content may be consumed.

It should also be noted that various aspects herein may involve a tag having substantially no transmission range, but rather may include contacts that physically couple to corresponding contacts to the RFID reader. While such an embodiment will be unable to avail itself of some of the benefits of RFID or other analogous technology, such an embodiment is feasible in connection with the access control implementations herein.

Any type of RFID tag may be used in connection with the access control implementations herein. For example, RFID tags can be either active or passive. Active tags require an internal battery and are often read/write tags. Passive tags do not require a dedicated power source, but rather obtain operating power generated from the reader. Further, tags may come in a variety of shapes and sizes, but are generally based on a custom designed silicon integrated circuit. Any transponder/tag may be used in connection with the access control implementations herein, and the tag type, size, etc. depends on the particular environment or application.

### IV. COMMUNICATIONS DEVICE

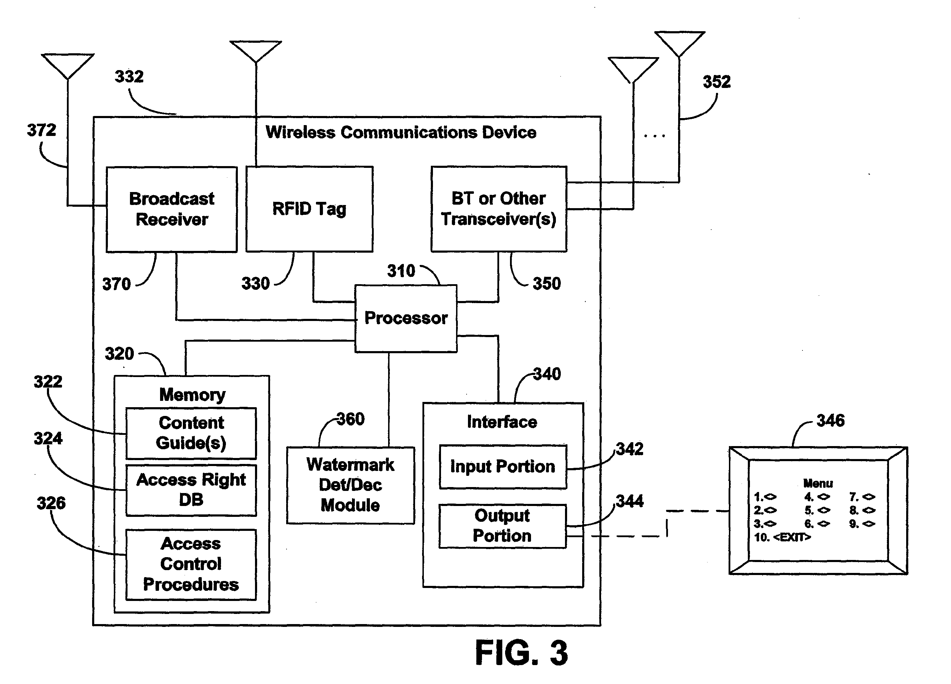

FIG. 3 illustrates an exemplary architecture for a communications device, such as for WCD 120 and device 210 of FIGS. 1 and 2, respectively. This architecture includes a processor 310, a memory 320, and an interface 340. In addition, the architecture of FIG. 3 may include transceiver(s) 350 such as a Bluetooth transceiver or other types of wireless communications transceivers, and antenna(s) 352 and/or RFID transponder or tag 330 and antenna 332. Bluetooth transceiver 350 and RFID tag 332 may be implemented in a manner described above.

As shown in FIG. 3, processor 310 is coupled to transceiver(s) 350 and RFID tag 330. Processor 310 controls device operation. Processor 310 may be implemented with one or more microprocessors that are each capable of executing software instructions stored in memory 320.

Memory 320 includes random access memory (RAM), read only memory (ROM), and/or flash memory, and stores information in the form of data and software components (also referred to herein as modules). These software components include instructions that can be executed by processor 310. Various types of software components may be stored in memory 320. For instance, memory 320 may store software components that control the operations of transceiver(s) 350 and RFID tag 330. Also, memory 320 may store software components that provide for the communications functionality, such as for the host, HCI interface, link manager, link controller or other communications components.

In addition, memory 320 may store software components that control the exchange of information through interface 340. As shown in FIG. 3, interface 340 is also coupled to processor 310. Interface 340 may facilitate the exchange of information with a user or other coupled devices. FIG. 3 shows that interface 340 includes an input portion 342 and an output portion 344. Input portion 342 may include one or more devices that allow a user to input information. Examples of such devices include keypads, touch screens, and microphones. Output portion 344 allows a user to receive information from WCD 120 or device 210. Thus, output portion 344 may include various devices, such as a display 346, and one or more audio speakers. Exemplary displays include liquid crystal displays (LCDs), and video displays. Display 346 may output a content guide or the like and content.

Furthermore, memory 320 may store a variety of data and applications to implement the various processes herein for performing access control over content. For example, memory 320 may store a content guide(s) 322 or the like (e.g., filtered and/or unfiltered), an access right database 324 or the like identifying access rights level profiles or data for one or more user profiles, access control procedures 326 for implementing the various functions and processes herein to control access and consumption of content, and other data or programs for facilitating selection, search and consumption of content, such as a media player.

The architecture of FIG. 3 may also include a watermark detecting/decoding module 326 for detecting, decoding and reading electronic (or digital) watermark encoded data, such as copyright information, access rating for content or other watermark encoded information.

The elements shown in FIG. 3 may be coupled according to various techniques. One such technique involves coupling processor 310, memory 320, RFID tag 332, interface 340, transceiver(s) 350 and watermark detecting/decoding module 360 through one or more bus interfaces. In addition, each of these components may be coupled to a power source, such as a removable and rechargeable battery pack (not shown) or a fixed power supply.

In various aspects herein, the architecture of FIG. 3 may also include broadcast receiver and interface, such as broadcast receiver(s) 370 and antenna(s) 372, to receive broadcasts. The receiver may include one or more antennas 372 (e.g., broadcast antennas) for receiving content (e.g. broadcast antenna) and/or one or more antennas for receiving and transmitting content. Various broadcasting schemes are described below in the Receiver Device section.

### V. RECEIVER DEVICE

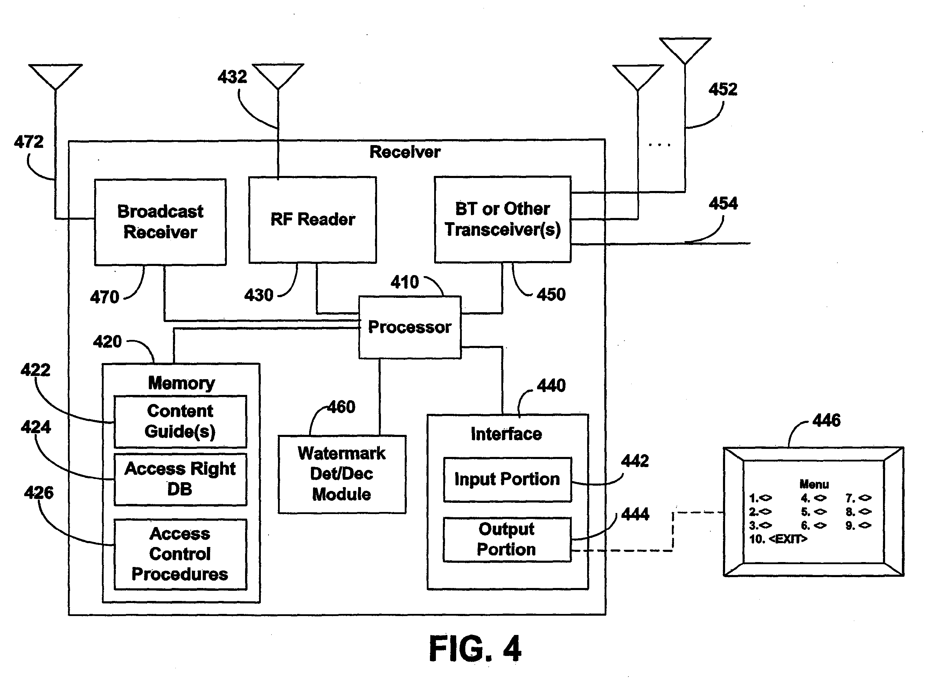

FIG. 4 illustrates an exemplary architecture for a communications device, such as for receiver 110 and device 210 of FIGS. 1 and 2, respectively. This architecture includes a processor 410, a memory 420, and an interface 440. In addition, the architecture of FIG. 4 may include transceiver(s) 450 such as a Bluetooth transceiver or other types of wireless communications transceivers and antenna(s) 452 and communications line(s) 454, and/or RFID reader 430 and antenna 432. Bluetooth transceiver 450 and RFID reader 432 may be implemented in a manner described above.

As shown in FIG. 4, processor 410 is coupled to transceiver(s) 450 and RFID reader 430. Processor 410 controls device operation. Processor 410 may be implemented with one or more microprocessors that are each capable of executing software instructions stored in memory 420.

Memory 420 includes random access memory (RAM), read only memory (ROM), and/or flash memory, and stores information in the form of data and software components (also referred to herein as modules). These software components include instructions that can be executed by processor 410. Various types of software components may be stored in memory 420. For instance, memory 420 may store software components that control the operations of transceiver(s) 450 and RFID tag 430. Also, memory 420 may store software components that provide for the communications functionality, such as for the host, HCI interface, link manager, link controller or other communications components.

In addition, memory 420 may store software components that control the exchange of information through interface 440. As shown in FIG. 4, interface 440 is also coupled to processor 410. Interface 440 may facilitate the exchange of information with a user or other coupled devices. FIG. 4 shows that interface 440 includes an input portion 442 and an output portion 444. Input portion 442 may include one or more devices that allow a user to input information. Examples of such devices include keypads, touch screens, and microphones. Output portion 444 allows a user to receive information from receiver 110 or device 210. Thus, output portion 444 may include various devices, such as a display 446, and one or more audio speakers. Exemplary displays include liquid crystal displays (LCDs), and video displays. Display 446 may output a content guide or the like and content.

Furthermore, memory 420 may store a variety of data and applications to implement the various processes herein for performing access control over content. For example, memory 420 may store a content guide(s) 422 or the like (filtered or unfiltered), an access right database 424 or the like identifying access rights level profiles or data for one or more user profiles, access control procedures 426 for implementing the various functions and processes herein to control access and consumption of content, and other data or programs for facilitating selection, search and consumption of content, such as a media player.

The architecture of FIG. 4 may also include a watermark detecting/decoding module 426 for detecting, decoding and reading electronic watermark encoded data, such as copyright information, access rating for content or other watermark encoded information.

The elements shown in FIG. 4 may be coupled according to various techniques. One such technique involves coupling processor 410, memory 420, RFID reader 432, interface 440, transceiver(s) 450 and watermark detecting/decoding module 426 through one or more bus interfaces. In addition, each of these components may be coupled to a power source, such as a removable and rechargeable battery pack (not shown) or a fixed power supply.

In various aspects herein, the architecture of FIG. 4 may also include broadcast receiver and interface, such as broadcast receiver(s) 470 and antenna(s) 472, to receive broadcasts. The receiver may include one or more antennas 472 (e.g., broadcast antennas) for receiving content (e.g. broadcast antenna) and/or one or more antennas for receiving and transmitting content.

In this example, it is possible to employ IP datacasting data to mobile clients over a wireless link using terrestrial DVB (DVB-T) communication techniques to provide audio, video and other data to mobile receivers.

The DVB-T transmission scheme is essentially cellular in nature with a transmission site associated with each cell. DVB-T uses MPEG-2 transport streams and so the IP data needs to be encapsulated into the DVB transmission signals. Data streams, comprising IP datagrams supplied from several sources, are encapsulated by an IP encapsulator and fed into the DVB-T network. The encapsulated IP stream is then transported to one or multiple transmission sites, which form cells of the DVB-T network, on an MPEG-2 transport stream for transmission over the air directly to the clients, or to a receiver station serving multiple clients.

The MPEG-2 transport stream, from the moment it is produced by the IP encapsulator, to the moment it is received by the client or the receiver station, is uni-directional in nature. IP packets containing the data are embedded in multi-protocol encapsulation (MPE) sections, which are transported within the TS packets. The MPE sections may also include forward error correction (FEC) information and time slicing information, by which data is conveyed discontinuously and allows the receiver to save battery power by switching off when no data is being transmitted to it. In other words, in the time slicing method instead of using the current default method of continuous DVB-T transmission, a time division multiplex-type of allocation is used. With this approach services are provided in bursts, making it possible to turn off a receiver when it is not needed and to turn it on to receive data packets.

### VI. CONTENT PROVIDER

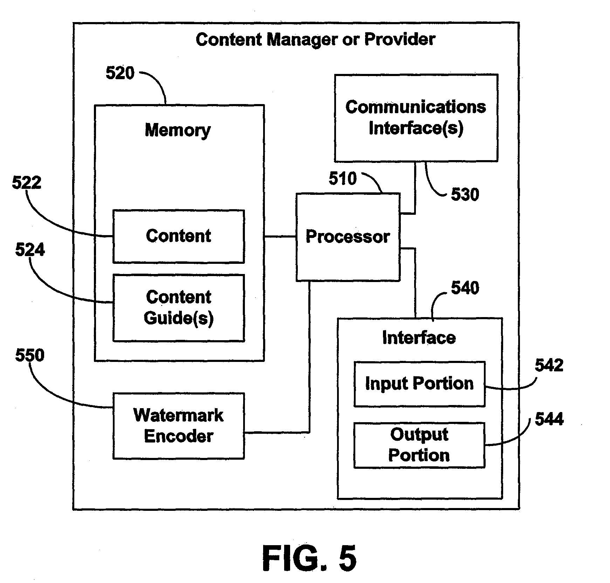

FIG. 5 illustrates an exemplary architecture for a content manager or provider system, such as content provider 140 of FIGS. 1 and 2, respectively. This architecture includes a processor 510, a memory 520, and may include an interface 540. In addition, the architecture of FIG. 5 may include communications interface 530 for performing communications such as with other remote systems and devices across a network environment.

As shown in FIG. 5, processor 510 is coupled to communications interface 530. Processor 510 controls device operation. Processor 510 may be implemented with one or more microprocessors that are each capable of executing software instructions stored in memory 520.

Memory 520 includes random access memory (RAM), read only memory (ROM), and/or flash memory, and stores information in the form of data and software components (also referred to herein as modules). These software components include instructions that can be executed by processor 510. Various types of software components may be stored in memory 520. For instance, memory 520 may store software components that control the operations of communications interface(s) 530. Also, memory 520 may store software components that provide for the communications functionality.

In addition, memory 520 may store software components that control the exchange of information through interface 540, if any. As shown in FIG. 5, interface 540 is also coupled to processor 510. Interface 540 may facilitate the exchange of information with a user or other coupled devices. FIG. 5 shows that interface 540 includes an input portion 542 and an output portion 544. Input portion 542 may include one or more devices that allow a user to input information. Examples of such devices include keypads, touch screens, and microphones. Output portion 544 allows a user to receive information from provider 140. Thus, output portion 544 may include various devices, such as a display, and one or more audio speakers. Exemplary displays include liquid crystal displays (LCDs), and video displays. The content provider may have means or the ability to transmit data to the receiver devices throughbroadcast transmission interface.

Furthermore, memory 520 may store a variety of data and applications to implement the various processes herein for performing access control over content. For example, memory 520 may store a variety of content 522 and content related information, such as a content guide(s) 524 or the like.

The architecture of FIG. 5 may also include a watermark encoder 550 for encoding (or embedding) content with an electronic watermark with information such as copyright information, access rating for content or other information to facilitate access control implementations herein.

The elements shown in FIG. 5 may be coupled according to various techniques. One such technique involves coupling processor 510, memory 520, communications interface 530, interface 540 and watermark encoder 550 through one or more bus interfaces. In addition, each of these components may be coupled to a power source, such as a removable and rechargeable battery pack (not shown) or a fixed power supply.

### VII. EXEMPLARY CONTENT RELATED INFORMATION

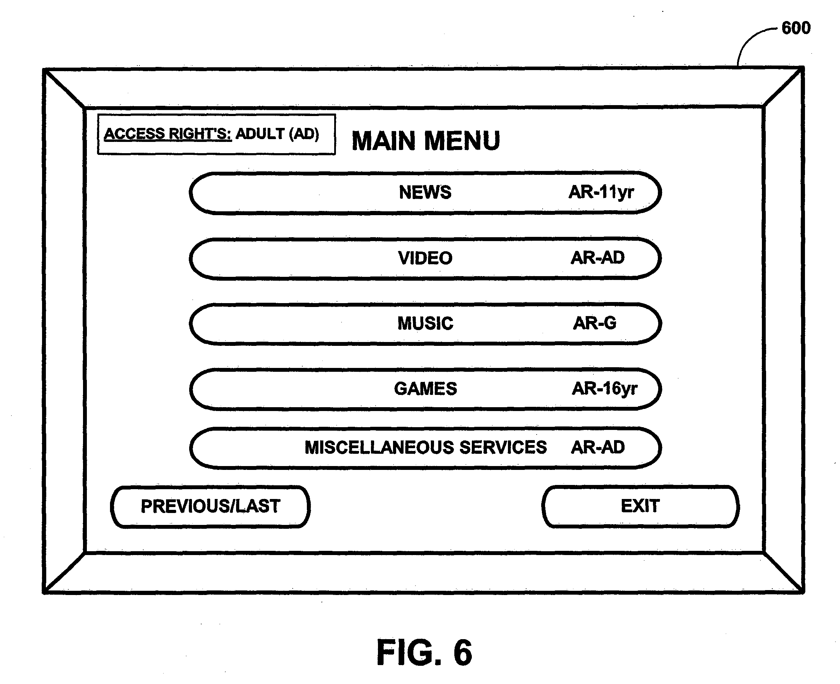

FIGS. 6-9 are screenshots reflecting exemplary presentations of information from a filtered content guide or the like in accordance with access control implementations herein. The screenshots show information from a content guide, such as EPG, ESG, etc., which is outputted to a user such as for selection based on the access rights level of one or more users and the access rating of the receivable content or content-type. The information may include information identifying the different receivable content and content-types and their associated access ratings. The content guide information may be outputted as a menu with selectable items and configured in a hierarchical tiered arrangement, such as by main category of content, subcategories of content, actual content, etc. A user may traverse the various menu items to select a desired content for output and consumption. Alternatively, the user may search the content guide to find particular content or content-type(s) employing a text search or the like. For example, the user may search by title, name, author, program time, channel, and so forth.

By filtering here is meant that the profile (e.g. I am 15 years old and I cannot watch the movies which are not allowed under 15 years old) in the mobile terminal is compared to the received content. Usually, the profile is set to the user when he subscribes to the phone services or other services, such as like making an agreement with the operator of the cellular network. The content guide or the content itself could be filtered separately or together. Thus, for example, the content guide may be hidden for those portions which are not allowed or suitable to the user. By filtering the content guide or the like, it is possible to selectively restrict or enable access or consumption of content according to the suitability or unsuitability of such for an audience of a user or group of users. It is further possible to reduce communications traffic and workload on the content transmitting and receiving sides by controlling transmission and/or receipt of content determined to be unsuitable for an end user(s), e.g., consumer(s) or potential consumer(s).

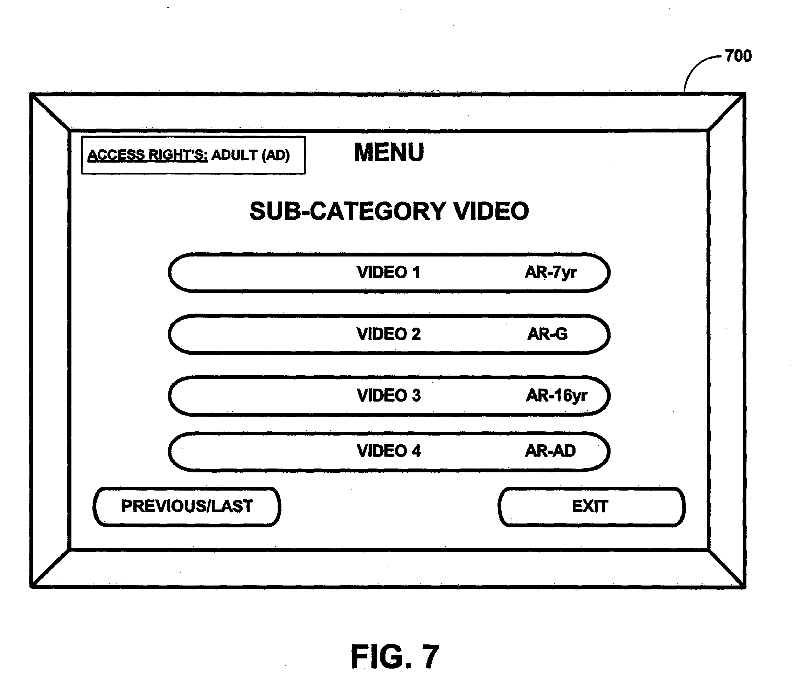

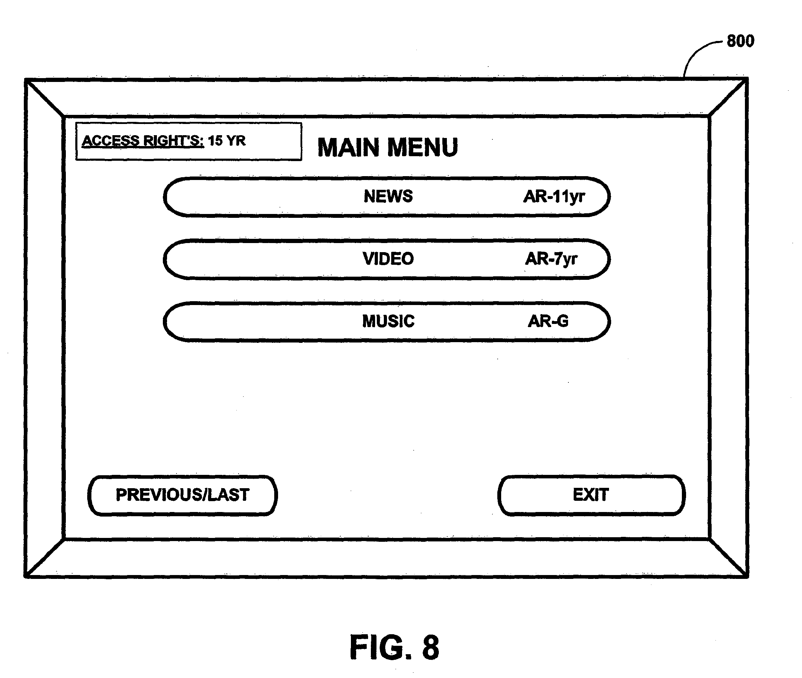

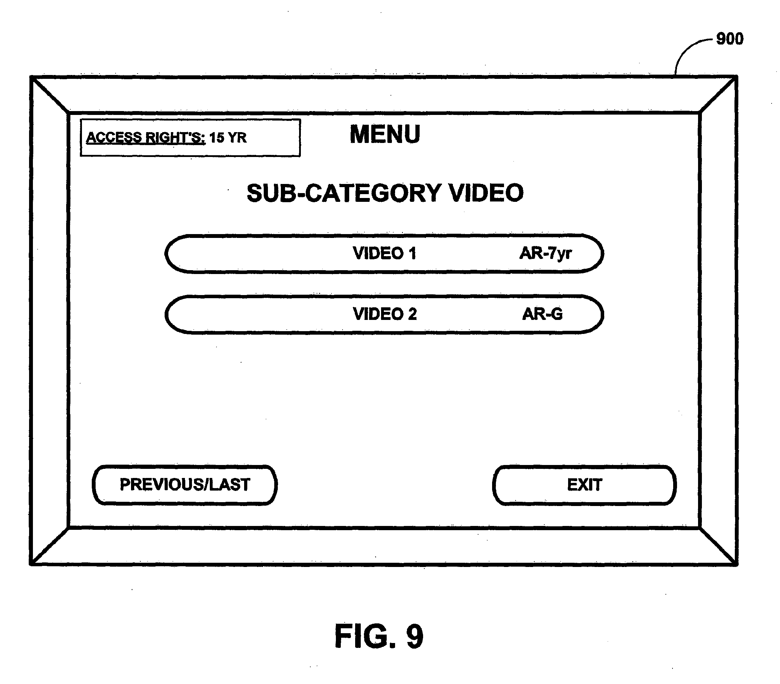

To facilitate understanding of the filtering aspects of a content guide or the like, examples of different receivable menu items are shown for an audience of one user or a group of users having an access rights level of Adult (AD) in FIGS. 6 and 7 and an audience of one user or a group of users having an access rights level of 15 years old in FIGS. 8 and 9.

For example, as shown in FIG. 6, a menu of items may be provided to a user (or group of users) having an access rights level of Adult. The menu of items receivable by this user may include access to NEWS having a highest access rating (AR) of 11 years old, VIDEO having a highest AR of Adult, MUSIC having a highest AR of general audience (G), GAMES having a highest AR of 16 years old and MISCELLANEOUS SERVICES having a highest AR of Adult. The user may traverse the menu of items to select a content category or subcategory for output. For example, in FIG. 7, a sub-menu of items is provided after a selection of VIDEO in FIG. 8 by a user having an access rights level of Adult. As shown in FIG. 8, the user is offered menu items VIDEO 1, VIDEO 2, VIDEO 3 and VIDEO 4 having highest ARs of 7 years old, G, 16 years old, Adult, respectively.

In comparison, as shown in FIG. 8, a menu of items may be provided to a user (or group of users) having an access rights level of 15 years old. The menu of items receivable by this user may include access to NEWS having a highest AR of 11 years old, VIDEO having an AR of 7 years old, MUSIC having an AR of General Audience. The user may traverse the menu of items to select a content category or subcategory for output. For example, in FIG. 9, a sub-menu of items is provided after a selection of VIDEO in FIG. 8 by a user having an access rights level of 15 years old. As compared to the choices provided to a user with an access rights level of Adult in FIGS. 6 and 7, the user in FIG. 9 with an access rights level of 15 years old is only offered menu items VIDEO 1 and VIDEO 2 having ARs of 7 years old and General Audience.

Although the above described one example of a content guide or menu and filtering thereof, other configurations may be employed with the access control implementation herein. These other configurations may include different visual or graphical layout of the menu items, different output medium for the menu of items such as in an audio format, hierarchical framework including only one tier of selections or multiple tiers, ordering of menu items such as by alphabetical order, and so forth. Further, other content-types than those shown and described in FIGS. 6-9 may be offered and other access rating types than those shown and described in FIGS. 6-9 may be employed in conjunction with the access control implementation herein.

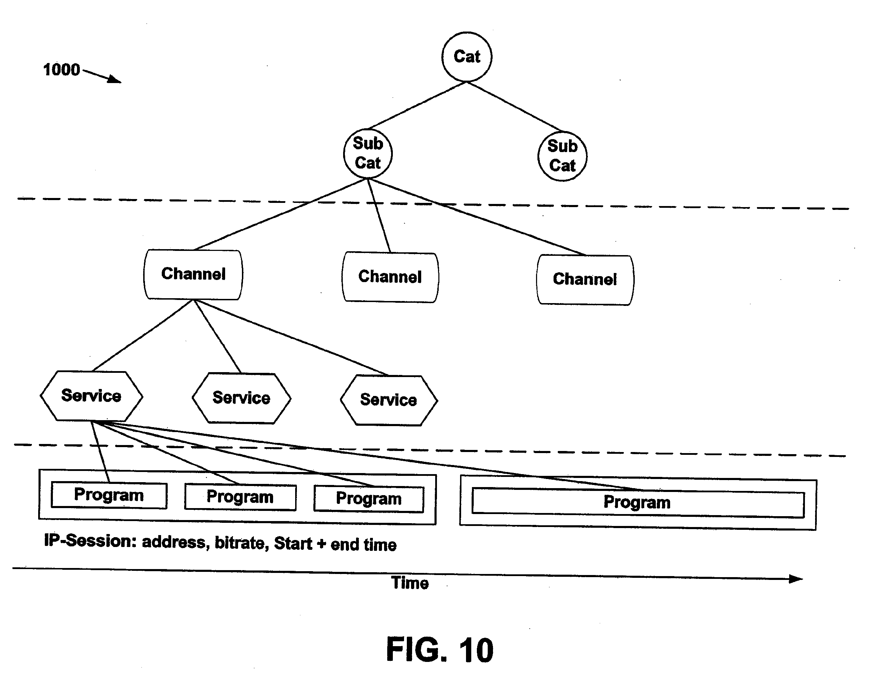

FIG. 10 is a framework of an exemplary content guide 1000 having a hierarchical structure, such as a tree structure defining parent/child relationships, based on access ratings of items in the guide.

The basic principle when using parental rating values is that the rating of the upper level always defines the highest rating value of the lower levels. For example, if the parental rating of a category is 5, the parental ratings of the service sets below that category must be 5 or below 5. The enumeration values, such as parental rating values, are typically in XML files described using integers. In Session Description Protocol (SDP) files, the enumeration values are either integers or strings. In most cases, terminals and the network must agree on the meaning of the values to be able to use the fields correctly. This chapter lists the enumeration values used and in the following chapters there is only a reference that the value is an enumeration. The items of the guide may represent some classification of content.

For example, content guide 1000 may include categories (Cat) classifying services. Below a category in the hierarchy there can be subcategories (SubCat) or service sets thereof classifying receivable content-types. Each subcategory may have associated therewith one or more channels, and each channel may have associated therewith one or more services. A service may belong to one or more channels and may be formed of one or more programs which is a user-perceived item that describes the content. In other words, in this example, service is the lowest level in hierarchy of categories, service sets and services. A service always belongs to one CP/SP (Content Provider / Service Provider). Services have service sessions, which mean the scheduled transmission of content related to the service. A service session can contain one or more IP sessions. Service sets combine the same kind of services of one service/content provider together. The same service can belong to many different service sets.

Content guide 1000 may also include information identifying the manner in which particular content may be accessed or received, such as the location or address of the content (depending on the communications technologies), the data transport or mode attributes, format of the data, size of the data, timing information related to the data (e.g., start and end times) or any other information which may facilitate access to content from a content provider(s). In this example, content guide 100 includes IP-Session information including address, bitrate, start time and end time, and programs offered are shown as being time dependent.

To facilitate access control over content, content guide 1000 may include access rating information associated with content or different items (e.g., categories, subcategories, channel, service, program, etc.) related to content identified or offered by the guide. The access rating for a particular content may rate the suitability or unsuitability of the particular content or content group (e.g., category, subcategory, channel, service, etc.) for consumption by a particular audience of one user or group of users. For example, in a parental control context, access rating may take the form of a parental rating in which content may be rated according to an age or age group or generally a maturity level (e.g., 15 years old, adult, etc.) or by the nature of the content (e.g., violence, adult language, etc.).

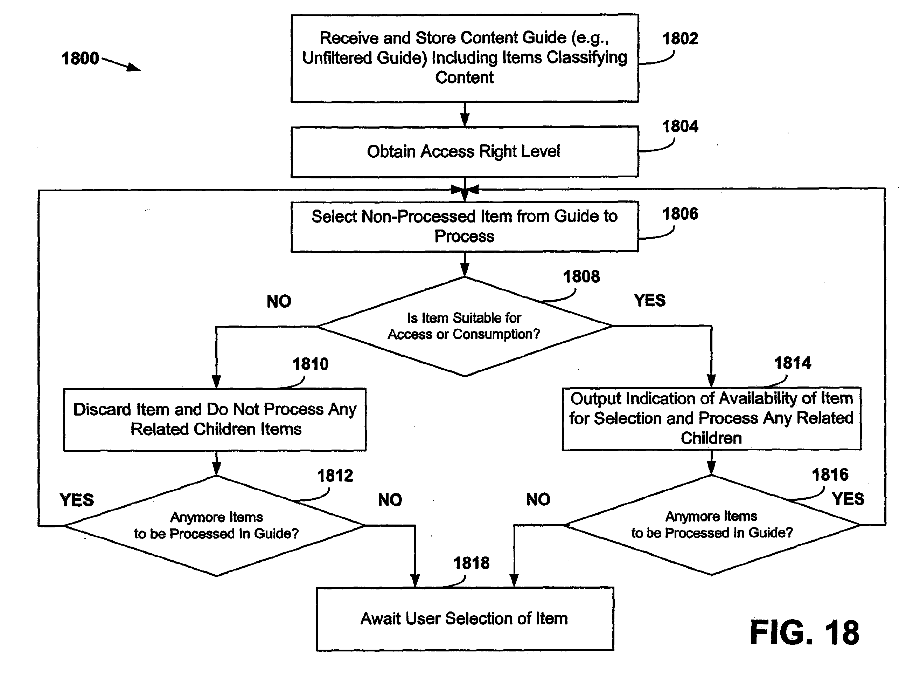

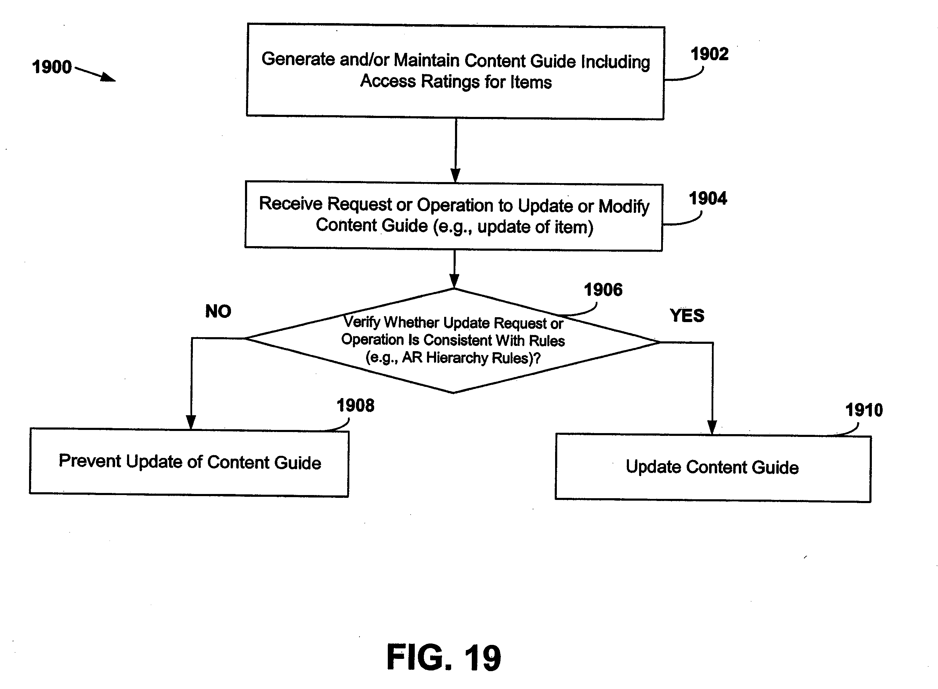

The various items of content guide 1000 may be configured in a hierarchical arrangement subject to a hierarchy rule in which a rating of a child item may not exceed the rating of a parent item. For example, a channel item having a 15 years old rating may not have child service items or program items exceeding a 15 years old rating, such as 17 years old rating. Such an arrangement facilitates update and modification of content guide and access control processing employing such a content guide. These processes will be discussed further below with reference to FIGS. 18 and 19.

Although the above describes an example of a content guide framework, content guide may be configured in other manners to perform the access control implementations herein. For example, the content guide may include other types of items, may take the form of different layout (e.g., a list) with or without hierarchy rules, may employ other rating types to identify the suitability or unsuitability of content for particular audiences or consumers, may include other access related information depending on the manner in which content is delivered (e.g., multicast, broadcast, peer-to-peer, cellular network, cable network, satellite network, IP network, time-slicing, etc.), and so forth.

Further, access right information for content is described above as being provided as part of content guide but may be provided in other manners. For example, access right information for content may be maintained locally or remotely in a storage facility and retrieved according to the desired content(s) or may be encoded as a watermark or the like on content along with copyright.

### VIII. EXEMPLARY ACCESS CONTROL IMPLEMENTATIONS

Various exemplary processes associated with access control implementations will be discussed below in conjunction with the Figures. The various processes may be discussed below with reference to the operational environments and systems and devices shown and described above with reference to FIGS. 1 and 2.

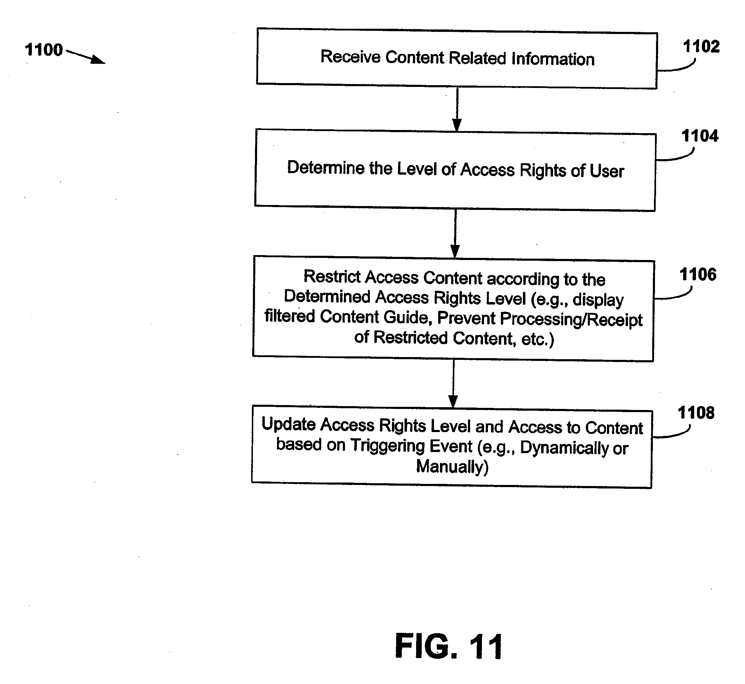

FIG. 11 is a flowchart of an exemplary process 1100 by which access or consumption of content by a user is controlled in accordance with one embodiment of the present invention. The process 1100 will be discussed with reference to the operation environment of FIG. 2.

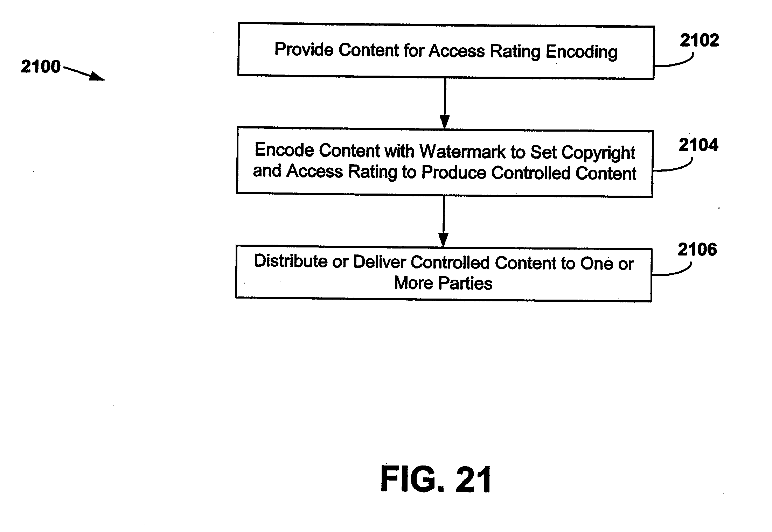

The process 1100 begins at step 1102 with WCD 210 receiving content related information from a remote system, such as content provider 140, across a network environment. The content related information may include, for example, content, a content guide, such as ESG, or other information identifying receivable content. Access rating information for content may also be received along with or as part of this information or may be maintained locally or remotely in a storage facility (e.g., memory) and retrieved to identify an associated access rating or the like for received or receivable content. As discussed further below with reference to FIG. 21, the content may be encoded (or embedded) with an electronic watermark indicating an access rating of the content.

One exemplary embodiment of step 1102 can be disclosed with ESG. As stated above, the ESG metadata contains information about the services available and this information is received by a WCD. As to ESG, a receiving mechanism for the information is ESG channel. ESG channel is the channel used to transport information about the available IP services. The information contains information about which services are available, how the content can be received and how to consume it. The information is typically sent as a set of announcement files by using IP based protocols. A description of how the files can be received and also the format of the files are provided as follows. The information reception can be divided into five phases: obtain the IP address for the hierarchy file, receive hierarchy file, main pages and service sessions descriptions, and retrieve detailed information. The service session information is described using SDP (Session Description Protocol) and XML. The XML is used for describing the content of session for the user and typically contains information relating to access rating.

At step 1104, WCD 210 determines the access rights level to content for a current user of WCD 210. The determination may involve accessing and retrieving from an access rights database or the like access right profiles for one or more users of WCD 210. The access right database or like may be maintained locally or at a remote location.

At step 1106, WCD 210 controls (e.g., restict or allow) access or consumption of content by the user according to the determined access rights level. For example, this may involve comparison of access rights level of the user to the access ratings of received or receivable content. Content having access rating in excess or outside the range of the user's access rights is restricted for access and consumption by the user, or content having access rating below or within the user's right is allowed to be accessed or consumed by the user. Such access control may be implemented in various manners, as follows:

[1] Content selections based on content related information, such as content guide or the like, may be filtered to eliminate or prohibit output or selection of items related to restricted content or content-type. For example, content selections or searches would not include restricted content. An example is shown and discussed above with reference to FIGS. 6-9.

[2] Available content selections and choices including restricted content may be outputted to the user. However, a user may be informed of those selections, which are restricted before or after selection. For example, restricted content selections may be marked or identified in some manner to reflect a restricted status (e.g., "unavailable" marking, highlighted, etc.) before or after selection or may be identified (e.g., displayed) to the user but can not be selected.

[3] Processing of restricted content or information related thereto is prevented or not performed by WCD 210. This may involve not processing or minimizing any processing of content related information associated with restricted content, or processing only content related information associated with non-restricted content. In the case of a content guide having a plurality of items, those items associated with restricted content are not processed such as for output in a menu of receivable content selections. An example of such an access control implementation is shown and described below with reference to FIGS. 18.

[4] Receipt or retrieval of restricted content is prevented or not performed. Depending on the form of the content transmission, such as broadcast, multicast or peer-to-peer or so forth, WCD 210 may simply ignore broadcasts or multicasts of restricted content or not request or stop transmission of restricted content thereto. In the reverse, WCD may be configured to receive only broadcasts or multicasts of non-restricted content.

In a further operational environment example in which content is delivered through time-slicing such as through Time Division Multiplexing (TDM), WCD 210 may turn a receiver of WCD OFF or power down during periods or data bursts in which restricted content is delivered or turn the receiver of WCD ON or power up during periods in which non-restricted content is delivered. Such an arrangement reduces power and processing usage of the WCD.

[5] Content already being outputted for consumption may be restricted according to access rights level of a current user. For example, WCD 210 may terminate receipt, processing and/or output of content being currently consumed if such content is considered unsuitable for consumption by a current user of WCD 210.

The above are simply a few examples of approaches to control access or consumption of content. Other approaches may be employed, as desired, to restrict or allow access or consumption of content based on an access rights level of the user. Non-Restricted Content may be outputted to a user for consumption.

Turning back to FIG. 11, at step 1108, WCD 210 may update access rights level to content based on various triggering events and accordingly update access statuses (e.g., restricted or accessible) of content based on updated access rights level of the user. Such an update may be performed dynamically or manually by a user.

For example, a user may switch his or her profile which may have a different access rights level associated therewith. The various access control implementations may be performed with the updated access rights level which may result in more or less restrictions to content or termination of receipt, processing and/or output of content currently being consumed by the user which becomes restricted in view of the updated access rights level.

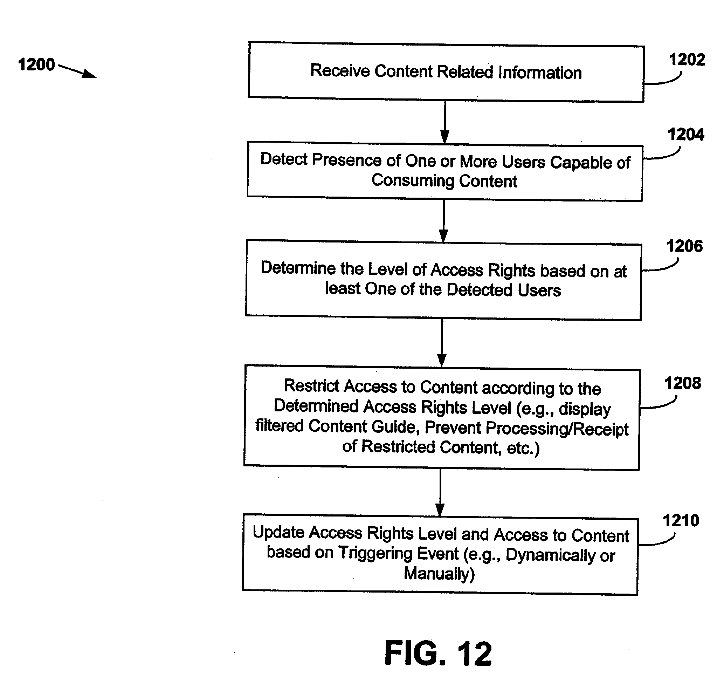

FIG. 12 is a flowchart of an exemplary process 1200 by which access or consumption of content by an audience of one user or a group of users is controlled in accordance with one embodiment of the present invention. The process 1200 will be discussed with reference to the operation environment of FIG. 1 in which a content receiver is able to output content for consumption by one or more users in one or more regions 112. The receiver may be a set top box (STB) which outputs content to one or more output devices, e.g., display, which may be viewed by one or more users.

The process 1200 begins at step 1202 with receiver 110 receiving content related information from a remote system, such as a content provider 140. The content related information may include, for example, content, a content guide or other information identifying receivable content. Access rating information for content may also be received along with or as part of this information or may be maintained locally or remotely in a storage facility (e.g., memory) and retrieved to identify an associated access rating or the like for received or receivable content. As discussed further below with reference to FIG. 21, the content may be encoded (or embedded) with an electronic watermark indicating an access rating of the content.

At step 1204, receiver 110 detects the presence of one or more users capable of consuming content received or receivable by the receiver. As shown in FIG. 1, receiver 110 may detect the presence of one user or a group of users via their wireless communications devices 120 by wireless communications (e.g., RFID, Bluetooth, WLAN, etc.) in one or more regions 112 in which content may be consumed. Such communications may involve transmission of some information identifying a user and/or access rights level of the user. For example, user identification information may be a Bluetooth Address (BD_ADDR) of the user's device when employing Bluetooth communications or RFID tag when employing RFID communications. Other identifying data may be employed to facilitate detection and identification of a user.

At step 1206, receiver 110 determines the access rights level to content for the detected user or the detected group of users. The determination may be based on receipt of access rights level information from the device(s) 120 or accessing an access right database or the like maintained locally or at a remote location based on the user identification information. In the situation where plural users are detected, the access rights level of the group may be the access rights level of any one of the detected users or may be based on an evaluation of the access rights level of some or all of the detected users (e.g., access rights level of group = lowest or highest access rights level of the group members or a combination of access rights levels of group members).

At step 1208, receiver 110 controls (e.g., restricts or allows) access or consumption of content by the one or more detected users according to the determined access rights level of at least one of the detected users. For example, this may involve comparison of access rights level of a detected user or a group of detected users to the access ratings of received or receivable content. Content having access rating in excess or outside the range of the user's access rights is restricted for access and consumption by the user, or content having access rating below or within the user's right is allowed to be accessed or consumed by the user. Such access control may be implemented in various manners, as follows:

[1] Content selections based on content related information, such as content guide or the like, may be filtered to eliminate or prohibit output or selection of items related to restricted content or content-type. For example, content selections or searches would not include restricted content. An example is shown and discussed above with reference to FIGS. 6-9.

[2] Available content selections and choices including restricted content may be outputted to the user. However, a user may be informed of those selections, which are restricted before or after selection. For example, restricted content selections may be marked or identified in some manner to reflect a restricted status (e.g., "unavailable" marking, highlighted, etc.) before or after selection or may be identified (e.g., displayed) to the user but can not be selected.

[3] Processing of restricted content or information related thereto is prevented or not performed by receiver 110. This may involve not processing or minimizing any processing of content related information associated with restricted content, or processing only content related information associated with non-restricted content. In the case of a content guide having a plurality of items, those items associated with restricted content are not processed such as for output in a menu of receivable content selections. An example of such an access control implementation is shown and described below with reference to FIGS. 18.

[4] Receipt or retrieval of restricted content is prevented or not performed. Depending on the form of the content transmission, such as broadcast, multicast or peer-to-peer or so forth, receiver 110 may simply ignore broadcasts or multicasts of restricted content or not request or stop transmission of restricted content thereto. In the reverse, receiver 110 may be confirgure to receive only broadcasts or multicasts of non-restricted content.

In a further operational environment example in which content is delivered through time-slicing such as through Time Division Multiplexing (TDM), receiver 110 may turn OFF or power down during periods or data bursts in which restricted content is delivered or turn ON or power up during periods in which non-restricted content is delivered. Such an arrangement reduces power and processing usage of the receiver. In case all or at least some of the WCDs in the group have the WCDs which are provided with content or content guide separately, the profiles of the users of the corresponding WCDs are exchanged through short range connections between these WCDs so that the access to the content or content guide is defined by the highest access rating among these WCDs.

[5] Content already being outputted for consumption may be restricted according to the determined access rights level of one detected user or the group of detected users. For example, receiver 110 may terminate receipt, processing and/or output of content being currently consumed if such content is considered unsuitable for consumption by the detected user(s).

In various aspects, the above processes may be implemented using Bluetooth or RFID technologies in the detection of a user's device and determination of the user's current access rights level.

For example, in a Bluetooth implementation, the receiver and the WCD may perform inquiry/inquiry response processes to determine and identity of the user or user's WCD, such as BD_ADDR, to obtain an access rights level for the user based on the BD_ADDR and control access or consumption of content accordingly. This implementation may involve further verification such a PIN input by the user via WCD which may entail additional paging and connection set-up steps.

In an RFID implementation, the receiver may identify a user with a RFID reader which reads identification information (including user ID) from an RFID tag to obtain an access rights level for the user based on the user ID. If additional security is desired, a remote controller may be used to input PIN for user by the receiver or, alternatively, a second communication link is established between the devices to transmit such information.

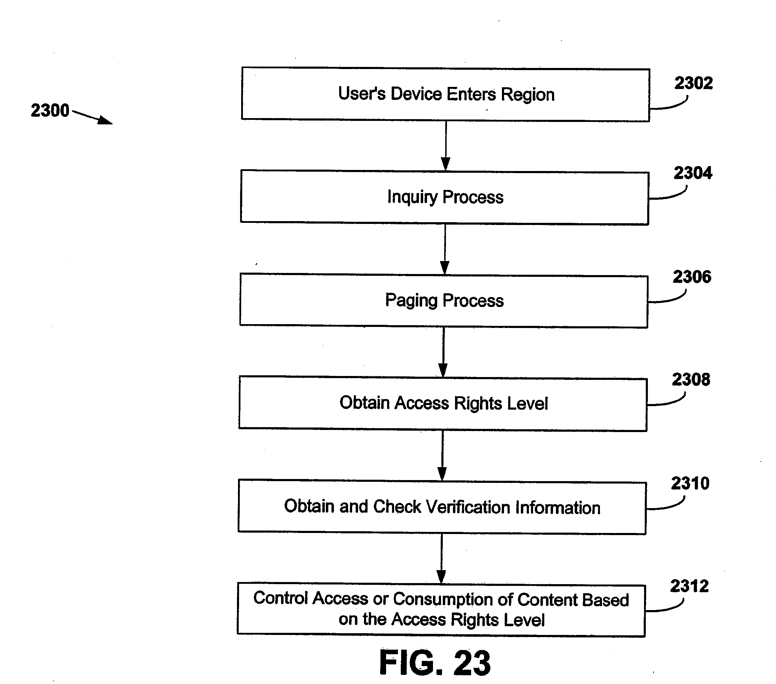

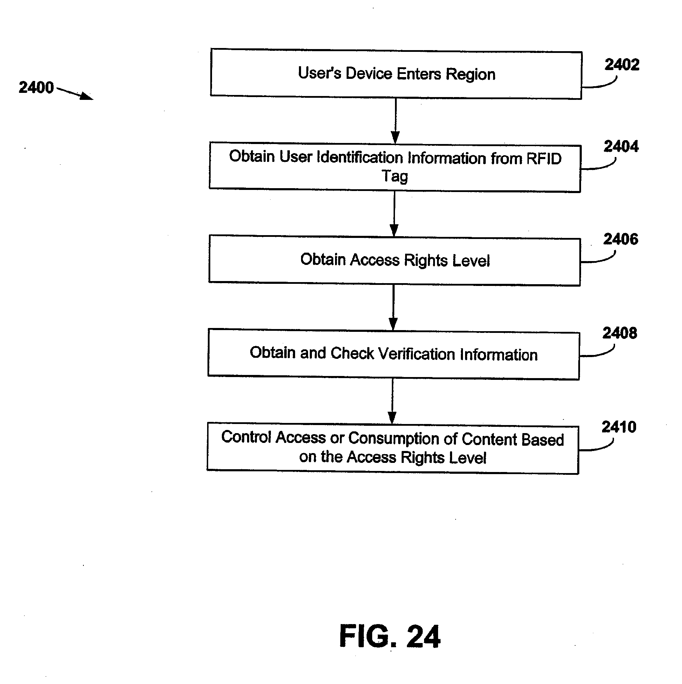

A more detailed description of the Bluetooth and RFID implementations are provided below with reference to FIGS. 23 and 24.

The above are simply a few examples of approaches to control access or consumption of restricted content. Other approaches may be employed, as desired, to restrict or allow access or consumption of content based on an access rights level of one or more detected users. Non-Restricted Content may be outputted to a user for consumption.

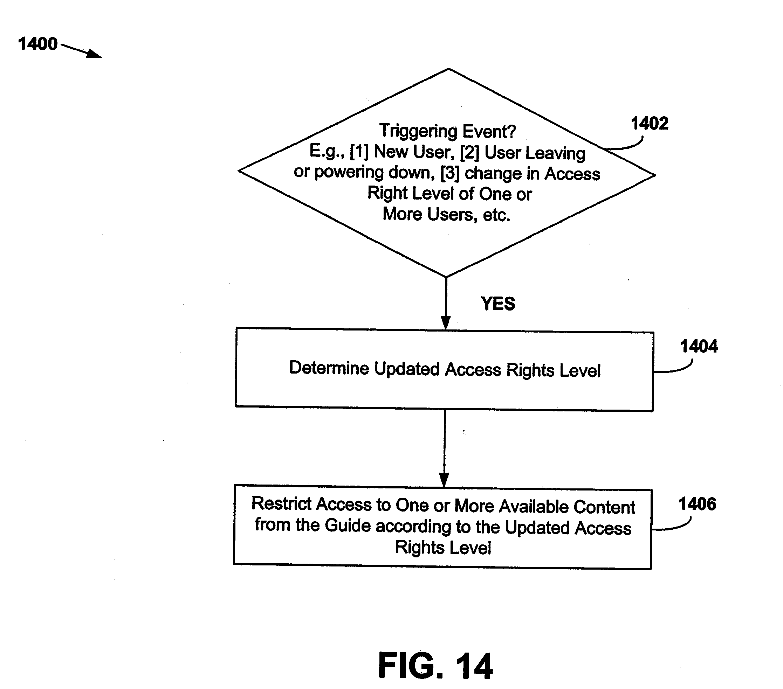

Turning back to FIG. 12, at step 1210, receiver 110 may update access rights level to content based on various triggering events and update access statuses (e.g., restricted or accessible) of content based on updated access rights level for the current audience of one or more detected users. Such an update may be performed dynamically or manually by one or more of the users. For example, the triggering events may involve a new user, a user leaving or a user's device powering down, changing profile of a user's device, and so forth. These and other exemplary triggering events are further discussed below with reference to FIG. 14.

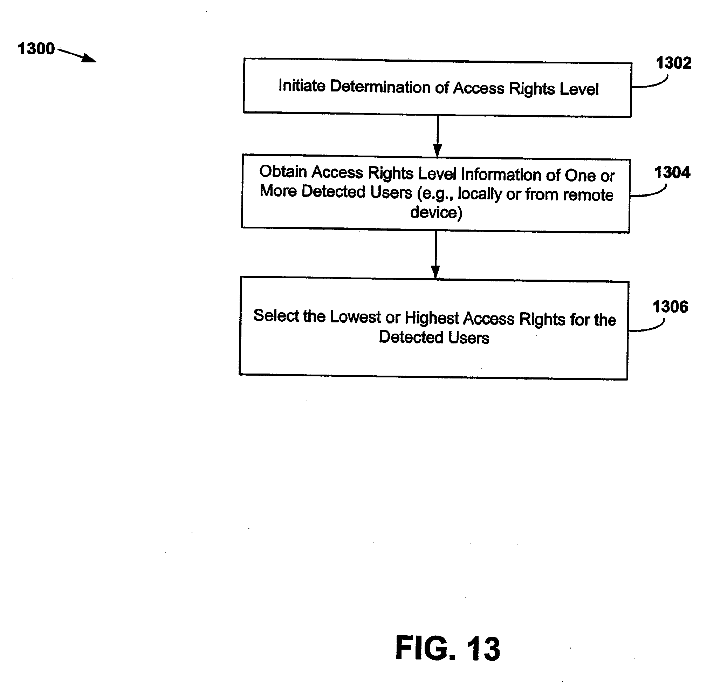

FIG. 13 is a flowchart of an exemplary process 1300 by which an access rights level is determined for an audience of one or more detected users. The process 1300 will be described below with reference to the operational environment shown in FIG. 1.

The process 1300 begins at step 1302 when a determination of access rights level for an audience of one or more detected users is initiated by receiver 110. At step 1304, receiver 110 obtains access rights level information of one or more detected users. At step 1306, receiver 110 determines an access rights level for the detected audience by selecting the lowest or highest access rights level out of the access rights levels of the one or more detected users (e.g., access rights level of group = lowest or highest access rights level of the group members). The lowest or highest access rights level may thereafter be employed to control access or consumption of content for the audience of one or more detected users.

The above is simply one example by which an access rights level for an audience of detected user(s) may be determined. Other determination implementations may be employed, such based on a combination of access right levels of detected users. For instance, this implementation may involve setting the access rights level for the detected group of users to an access rights level of Parental Guidance (PG) where the detected users includes at least one user with an access rights level of adult and another user with an access rights level of child, or other combinations as desired. As another alternative, an access rights level of any one of the detected users may be employed as the group access rights level.

FIG. 14 is a flowchart of an exemplary process 1400 by which an access rights level for one or more detected users may be updated based on a triggering event. The process 1400 will be described with reference to the operational environment shown in FIG. 1.

The process 1400 begins at step 1402 in which receiver 110 determines whether a triggering event has occurred to initiate an evaluation of whether to update an access rights level of an audience of detected user(s). Such a triggering event may include, for example, detection of a new user, detection of a user leaving or the powering down of a detected user's device, detection of a change in access rights level of any one of the detected one or more user and so forth. A change in an access rights level of a detected user may occur when a user profile of a detected device is changed.

At step 1404, receiver 110 evaluates access rights levels of the current audience of detected user(s) and determines an updated access rights level for the new audience arrangement. The new audience arrangement may include, for example, a newly detected user, a new user profile for a pre-existing detected device and other detected users, and may not include, for example, the user who is leaving or left or whose device has powered down.

At step 1406, receiver 110 controls access or consumption of content based on an updated access rights level for the new audience of detected user(s). As discussed above, such access control may entail restricting receipt, search, selection or output of restricted content.

The above simply provides a few examples of how access rights level for an audience and/or how access control over content may be changed upon some triggering event. Other events or conditions may occur to cause receiver 110 to update access rights level for an audience and/or to update restrictions (more or less or same) on content in accordance with the access control implementations herein.

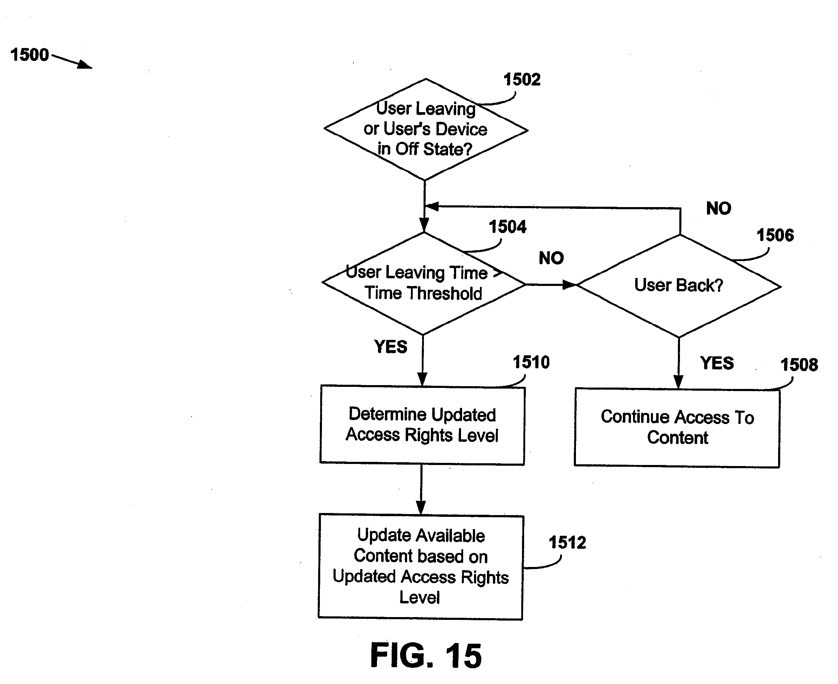

FIG. 15 is a flowchart of an exemplary process 1500 by which an access rights level for an audience of one or more detected users may be updated. The process 1500 will be described with reference to the operational environment shown in FIG. 1.

At step 1502, receiver 110 ascertains whether a user of WCD 120 no longer intends to consume content or is no longer capable of consuming content, e.g., the user is leaving or has left the consumption region or the user's device has powered down or turned off or left the communications range of the receiver. If such an occurrence is ascertained, the process 1500 proceeds to step 1504 in which receiver 110 determines whether a user leaving time is greater than a time threshold (e.g., three minutes, etc.). If not, receiver 110 detects whether the user has returned at step 1506. If the user has returned within the threshold time, then receiver 110 continues to provide access to content as if the user did not leave. Otherwise, receiver 110 may continue to check whether the user has returned until the time threshold is exceeded at steps 1504 and 1506.

If the time threshold is exceeded, the process 1500 proceeds to step 1510 in which receiver 110 determines updated or new access rights level for the remaining detected user(s) and updates restriction on content based on the updated access rights level at step 1512.

In this exemplary implementation, receiver 110 is configured to provide a user a time frame to leave and come back without initiating the process of determining a new access rights level for the audience and content control determination. For example, a user watching a program may temporarily leave the vicinity or region where the content is outputted (e.g., a recreation room) to go to the kitchen to grab some food.

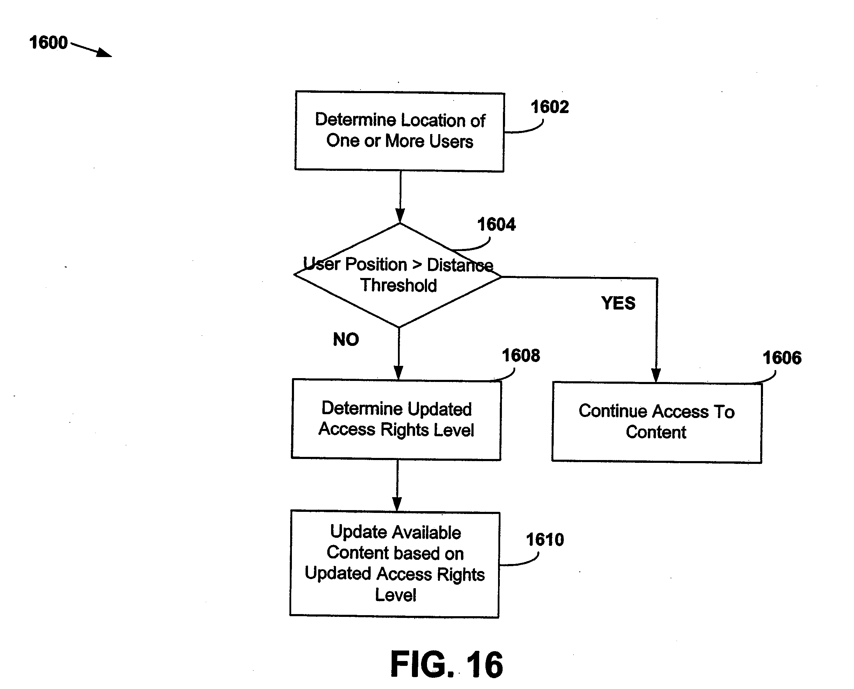

FIG. 16 is a flowchart of an exemplary process 1600 by which an access rights level for an audience of one or more detected users may be updated based on a position or location of the one or more detected users. The process 1600 will be described with reference to the operational environment shown in FIG. 1. Such an implementation may be employed where longer range wireless communications (such as beyond a consumption region(s)) is employed between receiver 110 and WCDs 120.

At step 1602, receiver 110 determines a location of one or more detected users. This may be performed via GPS system or other well known position determining algorithm (e.g., by signal strength). At step 1604, receiver 110 determines whether a location of one or more of the detected users exceeds a threshold distance or is outside a content consumption range. If not, receiver 110 continues to provide access to content as if the user did not leave at step 1606. Otherwise, the process 1600 proceeds to step 1608 in which receiver 110 determines updated access rights level for the remaining detected user(s) and updates restriction on content based on the updated access rights level at step 1610.

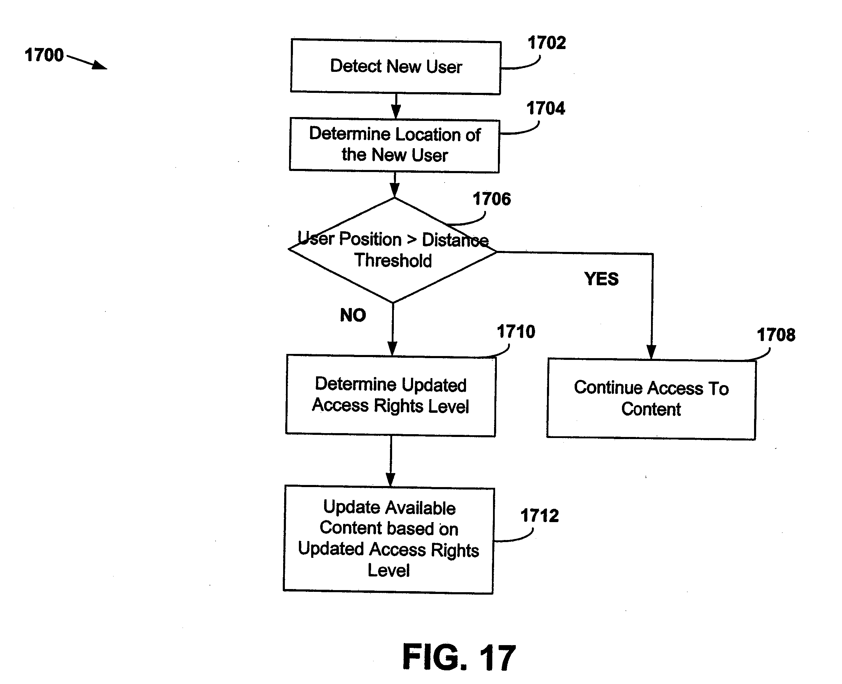

FIG. 17 is a flowchart of an exemplary process 1700 by which an access rights level for an audience of one or more detected users may be updated based on a position or location of the one or more detected users. The process 1700 will be described with reference to the operational environment shown in FIG. 1. Such an implementation may be employed where longer range wireless communications (such as beyond a consumption region(s)) is employed between receiver 110 and WCDs 120.

At step 1702, receiver detects a new user.

At step 1704, receiver 110 determines a location of the newly detected user. This may be performed via GPS system or other well known position determining algorithm (e.g., by signal strength). At step 1706, receiver 110 determines whether a location of the new detected user exceeds a threshold distance or is outside a content consumption range. If so, receiver 110 continues to provide access to content based on the current access rights level of the audience of one or more detected users. Receiver 110 may continue to track the position of the new detected user to determine whether the user is within a distance threshold or consumption range, for example, until it is apparent that the user does not intend to consume or is not capable of consuming content. Such an indication of intent or incapability may be determined by the user's device being turned off, the user's position exceeding a second distance threshold or range, the expiration of a time period, and so forth.

Otherwise, if the user is within a distance threshold or a consumption range, then receiver 110 determines updated access rights level for the remaining detected user(s) at step 1710 and updates restriction on content based on the updated access rights level at step 1712.

FIG. 18 is a flowchart of an exemplary process 1800 by which a content guide is processed based on an access rights level for one or more users. The process 1800 may be implemented by receiver 110 or device 210 in the operational environments shown in FIGS. 1 and 2. The process 1800 will be discussed below with reference to FIG. 10.

At step 1802, a content guide is received from a content manager or provider and stored. The content guide may be unfiltered and may include a plurality of items classifying content (e.g., Category, Subcategory, Services, etc.) and being arranged in a parent-child hierarchy based on access rating such as shown and described above with reference to FIG. 10.

At step 1804, an access rights level for an audience of one or more users is obtained.

At step 1806, a non-processed item from the guide is processed. At step 1808, a determination is made whether the access rights level of the audience is suitable or unsuitable for accessing the item. The suitability of an item may be based on a comparison of the access rights level of the audience to an access rating of an item.

If the item is deemed unsuitable for the audience, then the item is discarded as a receivable selection and any children items related to that item is not processed at step 1810. At step 1812, a determination is made whether anymore items need to be processed. If so, the process 1800 proceeds back to step 1806 with the selection of a non-processed item from the guide for processing. If there are no more items to be processed, the process 1800 proceeds to step 1818 to await any user selection of an item.

If the item is deemed suitable for the audience, then the item and its related children items may be processed and an indication of the availability of the item and children items for selection may be outputted for selection or searched at step 1814. At step 1816, a determination is made whether anymore items need to be processed. If so, the process 1800 proceeds back to step 1806 with the selection of a non-processed item from the guide for processing. If there are no more items to be processes, the process 1800 proceeds to step 1818 to await any user selection of an item.

Although the above describes one example of filtering implementation of a content guide structured according to hierarchical rules such as in FIG. 10, other content guide formats with or without rules may likewise be filtered according to access rights level of the audience.

FIG. 19 is a flowchart of an exemplary process 1900 by which a content guide is modified or updated. The process 1900 may be implemented by content provider 140 in the operational environments shown in FIGS. 1 and 2. The process 1900 will be discussed below with reference to the content guide of FIG. 10.

At step 1902, a content guide is generated and/or maintained in a remote or local storage facility for distribution.

At step 1904, an update request or operation is received to update or modify the content guide. The update or modification may include adding a new item(s) (e.g., new content offering, new category, new subcategory, new channel, new service, new program, etc.), deleting an item(s), changing item information such as an access rating, reclassifying items and relationships between items, and so forth.

At step 1906, a determination is performed as to whether the update request or operation is consistent with hierarchy rules, for example that an access rating of a child item may not exceed that of its parent item. If the update request or operation is inconsistent or violates the hierarchy rules, then the update request or operation is not performed at step 1908. Otherwise, if consistent or valid, the content guide is updated per the update request or operation.

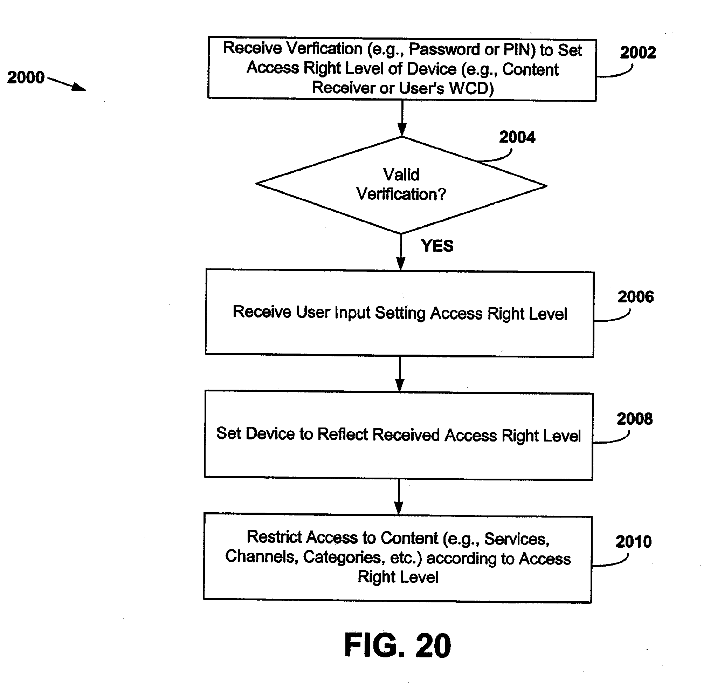

FIG. 20 is a flowchart of an exemplary process 2000 by which a user's access rights level is updated or set. The process 2000 may be implemented by a device or system, such as receiver 110, WCD 120 and/or device 210 in the operational environments shown in FIGS. 1 and 2.

The process 2000 begins with the initiation of operations to add or modify or set an access rights level for a user.

At step 2002, verification information is received such as a password, personal identification number (PIN) or other codes. At step 2004, a determination is made as to the validity of the verification information. If invalid, an access rights level may not be added, modified or set. If valid, the process 2000 continues and an access rights level may be added, modified or set at step 2006. A selection of access rights levels may be provided to a user. This selection may be graphical such as a pull down box listing the available right level choices (e.g., 0-21 years old, Adult, Violence, level 1 through level 10, etc.). Other graphical elements or input mechanisms may be employed to output the selection and receive access rights level information.

At step 2008, the device performs the addition, modification or setting of access rights level accordingly. For example, an access rights database may be updated with the received access rights level (e.g., update of user access right profiles) or the device such as devices 120 and 210 may be set to operate at the received access rights level (e.g., selection of an access right profile for a device). Thereafter, access to content may be implemented in accordance with the various access control implementations herein according to the received access rights level for the device.

FIG. 21 is a flowchart of an exemplary process 2100 by which content is encoded (or embedded) with access rating information. The process 2100 may be implemented by content provider 140 in the operational environments shown in FIGS. 1 and 2 such as via terminal 150.

At step 2102, content is provided for access rating encoding. The content is generated and maintained at storage facility for access and encoding.

At step 2104, content is encoded with an electronic watermark to set copyright information and/or access rating to produce controlled content. Various watermarking technologies such as those already employed in setting a copyright watermark may be employed to encode content with access rating information. Other information may be encoded with the electronic watermark technology to facilitate access control implementations herein.

At step 2106, the controlled content is thereafter distributed or delivered for eventual consumption by a user. For example, content provider 140 may distribute such controlled content to receiver 110 or device 210 for consumption, across various transmission mediums such as by broadcast, multicast or peer-to-peer.

The above describes one example of how content may be encoded with an access rating. Other approaches may be employed to encode content with access rating information, as desired.

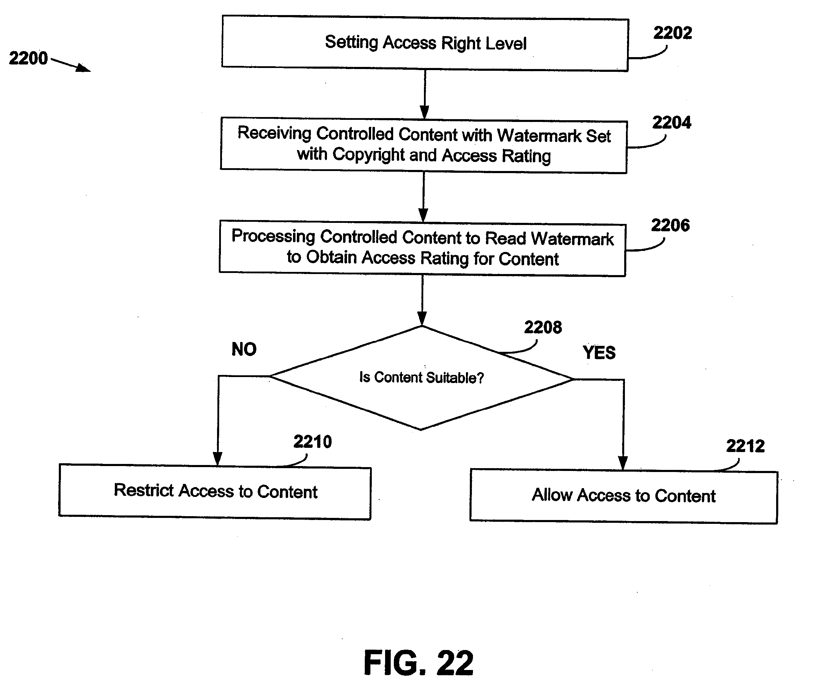

FIG. 22 is a flowchart of an exemplary process 2200 by which content encoded (or embedded) electronic watermark indicating access rating may be employed to provide access control over content. The process 2200 may be implemented by device or system, such as receiver 110 and device 210 in the operational environments shown in FIGS. 1 and 2.

At step 2202, access rights level of a device is set or determined. For example, in the environment of FIG. 1, receiver 110 determines an access rights level for one or more detected users. In the environment of FIG. 2, device 210 sets the access rights level according to a profile of a current user via a login procedure or other procedure. Setting of access rights level can be protected with a password or equivalent. For example, entering of PIN2 code of the device 210 can be required to change the level.

At step 2204, controlled content is received such as from content provider 140. The controlled content may include electronic watermark set with access rating along with, if desired, copyright or other information.

At step 2206, the controlled content is processed to decode and read the electronic watermark to determine an access rating of the content.

At step, 2208, a determination is made whether the content is suitable for consumption according to the access rights level and access rating of the content. If not, consumption and access of the content is restricted. Otherwise, if suitable, the content may be accessed and consumed.

Additionally it is possible in some embodiments of the present invention that an access rights level is a user-specific character in which case a user may logout in order to neutralize the access right level and login by setting the level in order to consume contents.

FIG. 23 illustrates a flowchart of an exemplary short-range encounter 2300 between two devices, such as a receiver 110 and WCD 120 of FIG. 1, employing Bluetooth communications. This encounter begins with a step 2302 in which the WCD enters a region such as a communicating range with the receiver.

Next, in a step 2304, the receiver and the WCD engage in an inquiry process. In this step, the receiver learns the identity (or discovers the existence) of the WCD. In Bluetooth implementations, the receiver operates in an inquiry state while the WCD operates in an inquiry scan state. When operating in the inquiry state, the receiver transmits an inquiry packet and the WCD listens for inquiry packets.

When the WCD receives the inquiry packet from the receiver, it transmits one or more frequency hop synchronization (FHS) packets, which are received by the receiver. The FHS packet(s) allow the receiver to become synchronized with the hop sequence of the WCD. In addition, the FHS packet(s) enable the receiver to derive information necessary to make a Bluetooth connection with the WCD. This information includes the native clock of the WCD (CLKN), the WCD's Bluetooth address (BD_ADDR), and error correction coding information.

In a step 2306, the receiver and the WCD engage in a paging process. During the paging process, the receiver invites the WCD to join an ad hoc network. Upon successful completion, the paging process results in an unsecured connection being established between the receiver and the WCD. In Bluetooth implementations, step 2306 comprises the exchange of various information between the receiver (which is in a paging state) and the WCD (which is in a page scan state).

More particularly, the receiver enters the paging state and transmits one or more paging packets. These paging packets each include an identification number based on the address of the WCD. Meanwhile, the WCD (which is in the page scan state) responds to the paging packets by transmitting a packet containing its address.

The receiver receives this packet from the WCD. In response, the receiver transmits a frequency hop synchronization (FHS) packet. The FHS packet is used to pass information that allows the WCD to synchronize with the frequency hopping sequence of the receiver. Upon receipt of this FHS packet, the WCD transmits a further packet to confirm receipt of the FHS packet.

At this point, a link is formed between the receiver and the WCD and both devices enter into a connection state. In the connection state, the receiver operates as a master device and the WCD operates as a slave device. Thus, the WCD employs the timing and frequency hopping sequence of the receiver. Additionally, the receiver transmits a packet to verify that a link has been set up. The WCD confirms this link by sending a packet to the receiver. In this example, the receiver is the master and the WCD is the slave.

At step 2308, the receiver obtains an access rights level associated with the user or the user's WCD, such as using the BD _ADDR, to access an access rights database. This database may contain access rights level for a plurality of BD_ADDRs or the like. The database may be stored locally or at an access remote location as desired.

If security is desired, the receiver may require additional verification, (such as PIN input) from the WCD, such as at step 2310. The verification process may involve additional paging and connection set-up steps.

Thereafter, at step 2312, access control may be implemented in the various aspects as described herein.

FIG. 24 is a flowchart of an exemplary short-range encounter 2400 between two devices, such as such as a receiver 110 and WCD 120 of FIG. 1, employing at least RFID technology. This encounter begins with a step 2402 in which the WCD with a RFID tag enters a region such as a communicating range with a RFID reader associated with the receiver.

Next, in a step 2404, identification information, such as a user ID, is provided from the RFID tag of WCD to the RFID reader of the receiver. Additional information, such as an access rights level, may also be transmitted from the tag. The RFID tag may be an active tag or a passive tag, as discussed above in the RFID section.

At step 2406, the receiver obtains the access rights level associated with the user or the user's WCD from the RFID tag or from an access rights database using the user ID. This database may contain access rights level for a plurality of user Ids or the like. The database may be stored locally or at an access remote location as desired.

If security is desired, the receiver may require additional verification, (such as PIN input) from the WCD, such as at step 2408. A remote controller may be used for to input PIN for user by the receiver or, alternatively, a second communications link may be established between the devices to transmit such information. The second communications link may be a Bluetooth link or any other communications link or channel suitable for communicating data.

Thereafter, at step 2410, access control may be implemented in the various aspects as described herein.

### IX. CONCLUSION

While various embodiments of the present invention have been described above, it should be understood that they have been presented by way of example only, and not in limitation. For instance, although examples have been described involving Bluetooth and RFID and generally WLAN technologies, other shorter-range and longer range communications technologies are within the scope of the present invention. Although access control schemes over content have been described involving set top boxes or wireless terminals other network or communications arrangements are also within the scope of the present invention. The access control implementations herein may also be implemented in hardware, software, firmware, or any combination thereof.

Accordingly, it will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A method of controlling user access, by one or more users each having associated therewith a wireless communications device, to content transmitted across a communications medium, comprising:
detecting a presence of one or more users in at least one region in which content receivable by at least one receiver terminal may be consumed via the one or more users' wireless communications devices by wireless communications; and
determining access right to content based on the detected one or more users, the access right defining a suitability or unsuitability of one or more users to consume content.

2. The method according to claim 1, wherein content is broadcasted or multicasted for receipt by the receiver terminal.

3. The method according to claim 1 or 2, wherein the region is defined by a communications range of the receiver terminal.

4. The method according to any preceding claim wherein the detecting a presence further comprises detecting a location of a user's communications device and determining whether the user's communications device is within the region.

5. The method according to any preceding claim wherein the determined access right is determined according to at least an access rights level of one detected user, and the access rights level enables determination of a suitability or unsuitability of particular content or content-types for consumption by the user.

6. The method according to claim 5, wherein the determined access right comprises a highest or lowest access rights level of the detected users.

7. The method according to claim 5 or 6, wherein the determined access rights is based according to a combination of access rights level of the detected users.

8. The method according to any preceding claim further comprising selectively controlling access or consumption of receivable content by the one or more detected users according to at least one of the determined access rights and access rating of receivable content.

9. The method according to claim 8, wherein the selectively controlling access comprises filtering received content for output by the receiver terminal to restrict or allow access or consumption of received content according to the determined access rights.

10. The method according to claim 8 or 9 wherein the selectively controlling access comprises filtering a content guide indicating content or content-types receivable by the receiver terminal.

11. The method according to claim 10, wherein the content guide comprises a broadcast program guide.

12. The method according to claim 10 or 11, wherein the content guide comprises one or more items indicating receivable content or content-type, the items being configured in a hierarchical parent-child structure in which an access rating of a child item can not exceed an access rating of a parent item.

13. The method according to any one of claims 9 to 12, wherein the filtering comprises preventing processing of an unsuitable item and any associated child items of the content guide based on the determined access rights.

14. The method according to any one of claims 8 to 13, wherein the selectively controlling access comprises controlling searching or selection of content or content-type by a user based on the determined access rights.

15. The method according to claim 8 to 14, wherein the selectively controlling access comprises controlling receipt of content from the receivable content by the receiver terminal based on the determined access rights.

16. The method according to claim 15, wherein the controlling receipt of content comprises abstaining from receiving data burst of content determined unsuitable for access or consumption based on the determined access rights.

17. The method according to claim 16, wherein the abstaining from receiving data burst comprises powering down at least content receiving components of the receiver terminal during data bursts of content determined unsuitable.

18. The method according to any preceding claim further comprising receiving receivable content including an electronic watermark indicating an access rating for the content.

19. The method according to any preceding claim further comprising dynamically updating the determined access rights.

20. The method according to claim 19, wherein the dynamically updating comprises determining a new access rights upon a triggering event comprising one of detection of a new user, detection of a user leaving the region, detection of a powering down of the wireless communications device of a detected user, and detection of a change in an access rights profile on the wireless communications device of a detected user.

21. The method according to claim 23, further comprising dynamically updating access or consumption control of receivable content according to the updated determined access rights.

22. The method according to any preceding claim wherein the determined access right is determined for a period of time.

23. A method of controlling user access to content receivable by a terminal across a communications medium, comprising:
maintaining a content guide including at least items identifying available content or content-types receivable by a terminal for consumption and access rating for receivable content, the items of the content guide being arranged in a parent-child hierarchical structure having a hierarchy rule in which an access rating of a child item does not exceed an access rating of a corresponding parent item; and
providing the content guide to the terminal.

24. The method according to claim 23, further comprising:
receiving information for updating a content guide;
determining whether the update complies with the hierarchy rule;
and
allowing or restricting the update based on the determination.

25. The method according to claim 24, wherein the content guide is one of an Electronic Program Guide (EPG) and an Electronic Service Guide (ESG).

26. A method of implementing access of content receivable by a terminal across a communication medium, comprising:
receiving from a remote location a content guide including at least items identifying receivable content or content-types receivable by a terminal for consumption and access rating for receivable content, the items of the content guide being arranged in a parent-child hierarchical structure having a hierarchy rule in which an access rating of a child item does not exceed an access rating of a corresponding parent item of the content guide; and
controlling access or consumption of receivable content according to an access rights level of a user associated with the terminal and the access rating of content from the content guide.

27. A method of implementing access control over receivable content by a terminal, comprising:
receiving content having an electronic watermark indicating an access rating associated with the content; and
controlling access to the content by at least one user of the terminal according to the access rating.

28. A computer-readable medium encoded with processing instructions for implementing a method of controlling user access, by one or more users each having associated therewith a wireless communications device, to content receivable across a communications medium, performed by a content receiver terminal, the method comprising:
detecting a presence of one or more users in at least one region in which the receivable content may be consumed via the one or more users' wireless communications devices by wireless communications; and
determining access rights to receivable content based on the detected one or more users, the access rights defining a suitability or unsuitability of one or more users to consume content.

29. An apparatus for controlling user access, by one or more users each having associated therewith a wireless communications device, to content delivered across a communications medium, comprising:
a detection module for detecting a presence of one or more users in at least one region in which the delivered content may be consumed via the one or more users' wireless communications devices by wireless communications; and
an access rights module for determining access rights to delivered content based on the detected one or more users, the access rights defining a suitability of unsuitability of one or more users to consume content.

30. The apparatus according to claim 29, wherein the apparatus is a content receiver terminal.

31. The apparatus according to claim 29, wherein the apparatus is a network node.

32. A display for displaying content delivered across a communications medium to one or more users each having associated therewith a wireless communications device, wherein content is displayed based on:
detecting a presence of one or more users in at least one region in which the receivable content may be consumed via the one or more users' wireless communications devices by wireless communications and
determining access rights to receivable content based on the detected one or more users, the access rights defining a suitability or unsuitability of one or more users to consume content.

33. A content receiver terminal or a network node or both of them configured to operate according to a method as claimed in any one of claims 1 to 27.
